# EUROPEAN PATENT APPLICATION

(11) **EP 4 120 731 A1**
(43) Date of publication of application: **18.01.2023**
(21) Application number: 21785520.4
(22) Date of filing: 09.04.2021
(51) Int. Cl.: H04W 28/08, H04L 9/06, H04L 12/46, H04L 29/06, H04L 29/12, H04W 12/02

(54) **INTERNET PROTOCOL VERSION IPV6-BASED WIRELESS NETWORK COMMUNICATION METHOD, AND COMMUNICATION DEVICE**

(30) Priority: 10.04.2020 CN 202010281148
(71) Applicant: Huawei Technologies Co., Ltd., Shenzhen, Guangdong 518129, (CN)
(72) Inventor: HE, Qi, Shenzhen, Guangdong 518129 (CN)
(74) Representative: Thun, Clemens
(86) International application number: PCT/CN2021/086217
(87) International publication number: WO 2021/204260

(57) **Abstract**

An Internet Protocol version IPv6-based wireless network communication method and a communication device are provided. The method includes: determining a transmission path of a plaintext IPv6 packet based on a tunnel endpoint identifier TEID field of the plaintext IPv6 packet, where the TEID field indicates a bearer to which the plaintext IPv6 packet belongs; and transmitting the plaintext IPv6 packet on the determined transmission path of the plaintext IPv6 packet.

## Description

This application claims priority to Chinese Patent Application No. 202010281148.2, filed with the China National Intellectual Property Administration on April 10, 2020 and entitled "INTERNET PROTOCOL VERSION IPV6-BASED WIRELESS NETWORK COMMUNICATION METHOD AND COMMUNICATION DEVICE", which is incorporated herein by reference in its entirety.

### TECHNICAL FIELD

This application relates to the communication field, and more specifically, to an Internet Protocol version IPv6-based wireless network communication method and a communication device.

### BACKGROUND

With the exhaustion of Internet Protocol version 4 (Internet Protocol version 4, IPv4) addresses, it has become a trend for countries to migrate IPv4 IP addresses to Internet Protocol version 6 (Internet Protocol version 6, IPv6) addresses. In the IPv4 protocol, a 5-tuple is generally used in the communication industry to determine a forwarding path of a data packet. In the IPv6 protocol, a forwarding path of a data packet may be determined based on a 3-tuple including a source address, a destination address, and a flow label. However, transmission paths calculated based on the 3-tuple may be the same, and consequently, all packets are transmitted along a same path, wasting bandwidth.

### SUMMARY

This application provides an Internet Protocol version IPv6-based wireless network communication method and a communication device. According to the communication method, IPv6 packets of a same bearer may be transmitted on a same path, or IPv6 packets of different bearers may be hashed to be transmitted on different transmission paths, to implement load balancing.

According to a first aspect, an Internet Protocol version IPv6-based network communication method is provided. The method may be performed by an access network device or a chip in an access network device, or the method may be performed by a core network device or a chip in a core network device. The method includes: determining a transmission path of a plaintext IPv6 packet based on a tunnel endpoint identifier TEID field of the plaintext IPv6 packet, where the TEID field indicates a bearer to which the plaintext IPv6 packet belongs; and transmitting the plaintext IPv6 packet on the determined transmission path of the plaintext IPv6 packet.

Therefore, the transmission path of the plaintext IPv6 packet is determined based on the tunnel endpoint identifier TEID field of the plaintext IPv6 packet. The tunnel endpoint identifier TEID field is an identifier of a bearer, and a TEID field of each bearer is different. Therefore, the transmission path of the plaintext IPv6 packet is determined based on the tunnel endpoint identifier TEID field of the plaintext IPv6 packet, to ensure that IPv6 packets of a same bearer may be transmitted on a same path, and IPv6 packets of different bearers may be hashed to be transmitted on different transmission paths, to implement load balancing.

With reference to the first aspect, in some implementations of the first aspect, the determining a transmission path of a plaintext IPv6 packet based on a tunnel endpoint identifier TEID field of the plaintext IPv6 packet includes: filling a flow label Flow Label field of the plaintext IPv6 packet based on the tunnel endpoint identifier TEID field of the plaintext IPv6 packet; performing hash calculation based on the filled Flow Label field and a first parameter involved in hash calculation to obtain a first hash value, where the SIP and the DIP are an SIP and a DIP of the plaintext IPv6 packet; and determining the transmission path of the plaintext IPv6 packet based on the first hash value.

With reference to the first aspect, in some implementations of the first aspect, the filling a flow label Flow Label field of the plaintext IPv6 packet based on the tunnel endpoint identifier TEID field of the plaintext IPv6 packet includes: filling N bits of the TEID field into N bits of the Flow Label field, where the Flow Label field includes N bits; or performing hash calculation on the TEID field and the first parameter to obtain a second hash value, and filling N bits of the second hash value into N bits of the Flow Label field, where the Flow Label field includes N bits.

With reference to the first aspect, in some implementations of the first aspect, the Flow Label field of the plaintext IPv6 packet includes a first field and a second field. The filling a flow label Flow Label field of the plaintext IPv6 packet based on the tunnel endpoint identifier TEID field of the plaintext IPv6 packet includes: intercepting, from the TEID field, a part with a length the same as that of the first field or the second field of the Flow Label field, to fill the first field or the second field of the Flow Label field; or performing hash calculation on the TEID field and the first parameter to obtain a second hash value, and intercepting, from the second hash value, a part with a length the same as that of the first field or the second field of the Flow Label field, to fill the first field or the second field in the Flow Label field.

With reference to the first aspect, in some implementations of the first aspect, when the plaintext IPv6 packet is fragmented into a plurality of data chips, the method further includes: performing hash calculation based on a Flow Label field, a source address SIP, and a destination address DIP of each data chip of the plurality of data chips to obtain a third hash value, where the SIP and the DIP are an SIP and a DIP of each data chip, and content of the Flow Label field of each data chip is the same as content of the Flow Label field of the plaintext IPv6 packet; and determining a transmission path of each data chip based on the third hash value.

With reference to the first aspect, in some implementations of the first aspect, the method further includes: when the plaintext IPv6 packet needs to be encrypted for transmission, filling a Flow Label field of a ciphertext IPv6 packet based on the filled flow label Flow Label field of the plaintext IPv6 packet, where the ciphertext IPv6 packet is a packet obtained by encrypting the plaintext IPv6 packet; and performing hash calculation based on the filled Flow Label field of the ciphertext IPv6 packet and a second parameter involved in hash calculation to obtain a fourth hash value; and determining a transmission path of the ciphertext IPv6 packet based on the fourth hash value.

With reference to the first aspect, in some implementations of the first aspect, the filling a Flow Label field of a ciphertext IPv6 packet based on the filled flow label Flow Label field of the plaintext IPv6 packet includes: content of the Flow Label field of the ciphertext IPv6 packet is the same as content of the flow label Flow Label field of the plaintext IPv6 packet; or performing hash calculation based on the Flow Label field of the plaintext IPv6 packet and the second parameter to obtain a fifth hash value, and filling the Flow Label field of the ciphertext IPv6 packet based on the fifth hash value.

With reference to the first aspect, in some implementations of the first aspect, the Flow Label field of the ciphertext packet includes a third field and a fourth field. The filling the Flow Label field of the ciphertext IPv6 packet based on the fifth hash value includes: filling N bits of the fifth hash value into N bits of the Flow Label field of the ciphertext IPv6 packet, where the Flow Label field includes N bits; or intercepting, from the fifth hash value, a part with a length the same as that of the third field or the fourth field of the Flow Label field of the ciphertext IPv6 packet, to fill the third field or the fourth field of the Flow Label field of the ciphertext IPv6 packet.

With reference to the first aspect, in some implementations of the first aspect, the method further includes: filling a flow label Flow Label field of the ciphertext IPv6 packet based on a tunnel endpoint identifier TEID field of a plaintext IPv4 packet, where the ciphertext IPv6 packet is a packet obtained by encrypting the plaintext packet; performing hash calculation based on the filled Flow Label field of the ciphertext IPv6 packet and the second parameter to obtain a sixth hash value; and determining a transmission path of the ciphertext IPv6 packet based on the sixth hash value.

With reference to the first aspect, in some implementations of the first aspect, the filling a flow label Flow Label field of the ciphertext IPv6 packet based on a tunnel endpoint identifier TEID field of a plaintext IPv4 packet includes: filling N bits of the TEID field into N bits of the Flow Label field of the ciphertext IPv6 packet, where the Flow Label field of the ciphertext IPv6 packet includes N bits; or performing hash calculation on the TEID field and the second parameter to obtain a seventh hash value, and filling N bits of the seventh hash value into N bits of the Flow Label field of the ciphertext IPv6 packet, where the Flow Label field of the ciphertext IPv6 packet includes N bits.

With reference to the first aspect, in some implementations of the first aspect, the Flow Label field of the ciphertext IPv6 packet includes a fifth field and a sixth field. The filling a flow label Flow Label field of the ciphertext IPv6 packet based on a tunnel endpoint identifier TEID field of a plaintext IPv4 packet includes: intercepting, from the TEID field, a part with a length the same as that of the fifth field or the sixth field of the Flow Label field of the ciphertext IPv6 packet, to fill the fifth field or the sixth field of the Flow Label field of the ciphertext IPv6 packet; or performing hash calculation on the TEID field and the second parameter to obtain an eighth hash value, and intercepting, from the eighth hash value, a part with a length the same as that of the fifth field or the sixth field of the Flow Label field of the ciphertext IPv6 packet, to fill the fifth field or the sixth field of the Flow Label field of the ciphertext IPv6 packet.

With reference to the first aspect, in some implementations of the first aspect, when the plaintext IPv4 packet is fragmented into a plurality of chips, the method further includes: fragmenting the plaintext IPv4 packet into the plurality of chips; encrypting each of the plurality of chips to obtain a ciphertext packet of each chip; and filling a Flow Label field of the ciphertext packet of each chip based on the tunnel endpoint identifier TEID field of the plaintext IPv4 packet; performing hash calculation based on the Flow Label field of the ciphertext packet and the second parameter to obtain a ninth hash value; and determining a transmission path of each ciphertext chip based on the ninth hash value.

With reference to the first aspect, in some implementations of the first aspect, the filling a Flow Label field of the ciphertext packet of each chip based on the tunnel endpoint identifier TEID field of the plaintext IPv4 packet includes: filling N bits of the TEID field into N bits of the Flow Label field of the ciphertext packet of each chip, where the Flow Label field of the ciphertext packet of each chip includes N bits; or performing hash calculation on the TEID field and the second parameter to obtain a tenth hash value, and filling N bits of the tenth hash value into N bits of the Flow Label field of the ciphertext packet of each chip, where the Flow Label field of the ciphertext packet of each chip includes N bits.

With reference to the first aspect, in some implementations of the first aspect, the Flow Label field of the ciphertext packet of each chip of the plaintext IPv4 packet includes a seventh field and an eighth field. The filling a Flow Label field of the ciphertext packet of each chip based on the tunnel endpoint identifier TEID field of the plaintext packet includes: intercepting, from the TEID field, a part with a length the same as that of the seventh field or the eighth field of the Flow Label field of the ciphertext packet of each chip, to fill the seventh field or the eighth field of the Flow Label field of the ciphertext packet of each chip; or performing hash calculation on the TEID field and the first parameter to obtain a ninth hash value, and intercepting, from the ninth hash value, a part with a length the same as that of the seventh field or the eighth field of the Flow Label field of the ciphertext packet of each chip, to fill the seventh field or the eighth field of the Flow Label field of the ciphertext packet of each chip.

With reference to the first aspect, in some implementations of the first aspect, the first parameter includes at least one of the following parameters: the SIP of the plaintext IPv6 packet, the DIP of the plaintext IPv6 packet, a Next Header of the plaintext IPv6 packet, a source port SPt of the plaintext IPv6 packet, and a destination port DPt of the plaintext IPv6 packet.

With reference to the first aspect, in some implementations of the first aspect, the second parameter includes at least one of the following parameters: an SIP of the ciphertext packet, a DIP of the ciphertext packet, and a Next Header of the ciphertext packet.

According to a second aspect, an Internet Protocol version IPv6-based communication method is provided. The method may be performed by a security gateway device, or may be performed by a chip in a security gateway device. The method includes: receiving a plaintext packet sent by a core network device; filling a flow label Flow Label field of a ciphertext IPv6 packet based on a tunnel endpoint identifier TEID field of the plaintext packet, where the ciphertext IPv6 packet is a packet obtained by encrypting the plaintext packet; performing hash calculation based on the filled Flow Label field of the ciphertext IPv6 packet and a first parameter involved in hash calculation to obtain a first hash value; and determining a transmission path of the ciphertext IPv6 packet based on the first hash value.

With reference to the second aspect, in some implementations of the second aspect, the plaintext packet is an IPv6 packet or an IPv4 packet. The filling a flow label Flow Label field of a ciphertext IPv6 packet based on a tunnel endpoint identifier TEID field of the plaintext packet includes: filling N bits of the TEID field into N bits of the Flow Label field of the ciphertext IPv6 packet, where the Flow Label field of the ciphertext IPv6 packet includes N bits; or performing hash calculation on the TEID field and the first parameter to obtain a second hash value, and filling N bits of the second hash value into N bits of the Flow Label field of the ciphertext IPv6 packet, where the Flow Label field of the ciphertext IPv6 packet includes N bits.

With reference to the second aspect, in some implementations of the second aspect, the plaintext packet is an IPv6 packet or an IPv4 packet. The Flow Label field of the ciphertext IPv6 packet includes a first field and a second field. The filling a flow label Flow Label field of a ciphertext IPv6 packet based on a tunnel endpoint identifier TEID field of the plaintext packet includes: intercepting, from the TEID field, a part with a length the same as that of the first field or the second field of the Flow Label field of the ciphertext IPv6 packet, to fill the first field or the second field of the Flow Label field of the ciphertext IPv6 packet; or performing hash calculation on the TEID field and the first parameter to obtain a third hash value, and intercepting, from the third hash value, a part with a length the same as that of the first field or the second field of the Flow Label field of the ciphertext IPv6 packet, to fill the first field or the second field of the Flow Label field of the ciphertext IPv6 packet.

With reference to the second aspect, in some implementations of the second aspect, the plaintext packet is an IPv6 packet. The filling a flow label Flow Label field of a ciphertext IPv6 packet based on a tunnel endpoint identifier TEID field of the plaintext packet includes: filling a flow label Flow Label field of the plaintext IPv6 packet based on the tunnel endpoint identifier TEID field of the plaintext IPv6 packet; and copying the filled flow label Flow Label field of the plaintext IPv6 packet to the flow label Flow Label field of the ciphertext IPv6 packet.

With reference to the second aspect, in some implementations of the second aspect, the plaintext packet is an IPv6 packet. When the plaintext packet is fragmented into a plurality of chips, the method further includes: filling a flow label Flow Label field of the plaintext IPv6 packet based on the tunnel endpoint identifier TEID field of the plaintext IPv6 packet; fragmenting the plaintext IPv6 packet filled with the Flow Label field into a plurality of chips, where each of the plurality of chips includes the filled Flow Label field; copying the Flow Label field of each chip to a Flow Label field of an encrypted ciphertext packet of each chip; performing hash calculation based on the Flow Label field of the ciphertext packet and the first parameter to obtain a fourth hash value; and determining a transmission path of each ciphertext packet based on the fourth hash value.

With reference to the second aspect, in some implementations of the second aspect, the filling a flow label Flow Label field of the plaintext IPv6 packet based on the tunnel endpoint identifier TEID field of the plaintext IPv6 packet includes: filling N bits of the TEID field into N bits of the Flow Label field of the plaintext IPv6 packet, where the Flow Label field of the plaintext IPv6 packet includes N bits; or performing hash calculation on the TEID field and a second parameter to obtain a fifth hash value, and filling N bits of the fifth hash value into N bits of the Flow Label field of the plaintext IPv6 packet, where the Flow Label field of the plaintext IPv6 packet includes N bits.

With reference to the second aspect, in some implementations of the second aspect, the Flow Label field of the plaintext IPv6 packet includes a first field and a second field. The filling a flow label Flow Label field of the plaintext IPv6 packet based on the tunnel endpoint identifier TEID field of the plaintext IPv6 packet includes: intercepting, from the TEID field, a part with a length the same as that of the first field or the second field of the Flow Label field of the plaintext IPv6 packet, to fill the first field or the second field of the Flow Label field of the plaintext IPv6 packet; or performing hash calculation on the TEID field and the second parameter to obtain a sixth hash value, and intercepting, from the sixth hash value, a part with a length the same as that of the first field or the second field of the Flow Label field of the plaintext IPv6 packet, to fill the first field or the second field of the Flow Label field of the plaintext IPv6 packet.

With reference to the second aspect, in some implementations of the second aspect, when the plaintext packet is an IPv4 packet or an IPv6 packet, and the plaintext packet is fragmented into a plurality of chips, the method further includes: fragmenting the plaintext packet into the plurality of chips; encrypting each of the plurality of chips to obtain a ciphertext packet of each chip; filling a Flow Label field of the ciphertext packet of each chip based on the tunnel endpoint identifier TEID field of the plaintext packet; performing hash calculation based on the Flow Label field of the ciphertext packet and the first parameter to obtain a seventh hash value; and determining a transmission path of each ciphertext packet based on the seventh hash value.

With reference to the second aspect, in some implementations of the second aspect, the filling a Flow Label field of the ciphertext packet of each chip based on the tunnel endpoint identifier TEID field of the plaintext packet includes: filling N bits of the TEID field into N bits of the Flow Label field of the ciphertext packet of each chip, where the Flow Label field of the ciphertext packet of each chip includes N bits; or performing hash calculation on the TEID field and the first parameter to obtain an eighth hash value, and filling N bits of the eighth hash value into N bits of the Flow Label field of the ciphertext packet of each chip, where the Flow Label field of the ciphertext packet of each chip includes N bits.

With reference to the second aspect, in some implementations of the second aspect, the Flow Label field of the ciphertext packet of each chip includes a first field and a second field, and the filling a Flow Label field of the ciphertext packet of each chip based on the tunnel endpoint identifier TEID field of the plaintext packet includes: intercepting, from the TEID field, a part with a length the same as that of the first field or the second field of the Flow Label field of the ciphertext packet of each chip, to fill the first field or the second field of the Flow Label field of the ciphertext packet of each chip; or performing hash calculation on the TEID field and the first parameter to obtain a ninth hash value; and intercepting, from the ninth hash value, a part with a length the same as that of the first field or the second field of the Flow Label field of the ciphertext packet of each chip, to fill the first field or the second field of the Flow Label field of the ciphertext packet of each chip.

With reference to the second aspect, in some implementations of the second aspect, the first parameter includes at least one of the following parameters: an SIP of the ciphertext packet, a DIP of the ciphertext packet, or a Next Header of the ciphertext packet.

With reference to the second aspect, in some implementations of the second aspect, the second parameter includes at least one of the following parameters: an SIP of the plaintext packet, a DIP of the plaintext packet, a Next Header of the plaintext packet, a source port SPt of the plaintext packet, and a destination port DPt of the plaintext packet.

According to a third aspect, a communication device is provided. The communication device includes: a processing unit, configured to determine a transmission path of a plaintext IPv6 packet based on a tunnel endpoint identifier TEID field of the plaintext IPv6 packet; and a transceiver unit, configured to transmit the plaintext IPv6 packet on the determined transmission path of the plaintext IPv6 packet.

With reference to the third aspect, in some implementations of the third aspect, the processing unit is specifically configured to fill a flow label Flow Label field of the plaintext IPv6 packet based on the tunnel endpoint identifier TEID field of the plaintext IPv6 packet; perform hash calculation based on the filled Flow Label field and a first parameter involved in hash calculation to obtain a first hash value; and determine the transmission path of the plaintext IPv6 packet based on the first hash value.

With reference to the third aspect, in some implementations of the third aspect, the processing unit is specifically configured to fill N bits of the TEID field into N bits of the Flow Label field, where the Flow Label field includes N bits; or perform hash calculation on the TEID field and the first parameter to obtain a second hash value, and fill N bits of the second hash value into N bits of the Flow Label field, where the Flow Label field includes N bits.

With reference to the third aspect, in some implementations of the third aspect, the Flow Label field of the plaintext IPv6 packet includes a first field and a second field. The processing unit is specifically configured to intercept, from the TEID field, a part with a length the same as that of the first field or the second field of the Flow Label field, to fill the first field or the second field of the Flow Label field; or perform hash calculation on the TEID field and the first parameter to obtain a second hash value, and intercept, from the second hash value, a part with a length the same as that of the first field or the second field of the Flow Label field, to fill the first field or the second field of the Flow Label field.

With reference to the third aspect, in some implementations of the third aspect, when the plaintext IPv6 packet is fragmented into a plurality of data chips, the processing unit is further configured to perform hash calculation based on a Flow Label field of each of the plurality of data chips and the first parameter to obtain a third hash value, where content of the Flow Label field of each data chip is the same as content of the Flow Label field of the plaintext IPv6 packet; and determine a transmission path of each data chip based on the third hash value.

With reference to the third aspect, in some implementations of the third aspect, the processing unit is further configured to: when the plaintext IPv6 packet needs to be encrypted for transmission, fill a Flow Label field of a ciphertext IPv6 packet based on the filled flow label Flow Label field of the plaintext IPv6 packet, where the ciphertext IPv6 packet is a packet obtained by encrypting the plaintext IPv6 packet; and perform hash calculation based on the filled Flow Label field of the ciphertext IPv6 packet and a second parameter involved in hash calculation to obtain a fourth hash value, where an SIP and a DIP are an SIP and a DIP of the ciphertext IPv6 packet; and determine a transmission path of the ciphertext IPv6 packet based on the fourth hash value.

With reference to the third aspect, in some implementations of the third aspect, the processing unit is further configured to copy the flow label Flow Label field of the plaintext IPv6 packet to the Flow Label field of the ciphertext IPv6 packet; or perform hash calculation on the flow label Flow Label field of the plaintext IPv6 packet and the second parameter to obtain a fifth hash value, and fill the Flow Label field of the ciphertext IPv6 packet based on the fifth hash value.

With reference to the third aspect, in some implementations of the third aspect, the Flow Label field of the ciphertext packet includes a third field and a fourth field. The processing unit is further configured to fill N bits of the fifth hash value into N bits of the Flow Label field of the ciphertext IPv6 packet, where the Flow Label field includes N bits; or intercept, from the fifth hash value, a part with a length the same as that of the third field or the fourth field of the Flow Label field of the ciphertext IPv6 packet, to fill the third field or the fourth field of the Flow Label field of the ciphertext IPv6 packet.

With reference to the third aspect, in some implementations of the third aspect, the processing unit is further configured to fill the flow label Flow Label field of the ciphertext IPv6 packet based on a tunnel endpoint identifier TEID field of a plaintext IPv4 packet, where the ciphertext IPv6 packet is a packet obtained by encrypting the plaintext packet; perform hash calculation based on the filled Flow Label field of the ciphertext IPv6 packet and the second parameter to obtain a sixth hash value; and determine a transmission path of the ciphertext IPv6 packet based on the sixth hash value.

With reference to the third aspect, in some implementations of the third aspect, the processing unit is further configured to fill N bits of the TEID field into N bits of the Flow Label field of the ciphertext IPv6 packet, where the Flow Label field of the ciphertext IPv6 packet includes N bits; or perform hash calculation on the TEID field and the second parameter to obtain a seventh hash value, and fill N bits of the seventh hash value into N bits of the Flow Label field of the ciphertext IPv6 packet, where the Flow Label field of the ciphertext IPv6 packet includes N bits.

With reference to the third aspect, in some implementations of the third aspect, the Flow Label field of the ciphertext IPv6 packet includes a fifth field and a sixth field. The processing unit is further configured to intercept, from the TEID field, a part with a length the same as that of the fifth field or the sixth field of the Flow Label field of the ciphertext IPv6 packet, to fill the fifth field or the sixth field of the Flow Label field of the ciphertext IPv6 packet; or perform hash calculation on the TEID field and the second parameter to obtain an eighth hash value, and intercept, from the eighth hash value, a part with a length the same as that of the fifth field or the sixth field of the Flow Label field of the ciphertext IPv6 packet, to fill the fifth field or the sixth field of the Flow Label field of the ciphertext IPv6 packet.

With reference to the third aspect, in some implementations of the third aspect, when the plaintext IPv4 packet is fragmented into a plurality of chips, the processing unit is further configured to fragment the plaintext IPv4 packet into the plurality of chips; encrypt each of the plurality of chips to obtain a ciphertext packet of each chip; fill a Flow Label field of the ciphertext packet of each chip based on the tunnel endpoint identifier TEID field of the plaintext IPv4 packet; perform hash calculation based on the Flow Label field of the ciphertext packet and the second parameter to obtain a ninth hash value; and determine a transmission path of each ciphertext chip based on the ninth hash value.

With reference to the third aspect, in some implementations of the third aspect, the processing unit is further configured to fill N bits of the TEID field into N bits of the Flow Label field of the ciphertext packet of each chip, where the Flow Label field of the ciphertext packet of each chip includes N bits; or perform hash calculation on the TEID field and the second parameter to obtain a tenth hash value, and fill N bits of the tenth hash value into N bits of the Flow Label field of the ciphertext packet of each chip, where the Flow Label field of the ciphertext packet of each chip includes N bits.

With reference to the third aspect, in some implementations of the third aspect, the Flow Label field of the ciphertext packet of each chip includes a seventh field and an eighth field. The processing unit is further configured to intercept, from the TEID field, a part with a length the same as that of the seventh field or the eighth field of the Flow Label field of the ciphertext packet of each chip, to fill the seventh field or the eighth field of the Flow Label field of the ciphertext packet of each chip; or perform hash calculation on the TEID field and the second parameter to obtain a ninth hash value, and intercept, from the ninth hash value, a part with a length the same as that of the seventh field or the eighth field of the Flow Label field of the ciphertext packet of each chip, to fill the seventh field or the eighth field of the Flow Label field of the ciphertext packet of each chip.

With reference to the third aspect, in some implementations of the third aspect, the second parameter includes at least one of the following parameters: an SIP of the plaintext packet, a DIP of the plaintext packet, a Next Header of the plaintext packet, a source port SPt of the plaintext packet, and a destination port DPt of the plaintext packet.

With reference to the third aspect, in some implementations of the third aspect, the second parameter includes at least one of the following parameters: an SIP of the ciphertext packet, a DIP of the ciphertext packet, a Next Header of the ciphertext packet.

According to a fourth aspect, a security gateway device is provided. The security gateway device includes a transceiver unit, configured to receive a plaintext packet sent by a core network device; and a processing unit, configured to fill a flow label Flow Label field of a ciphertext IPv6 packet based on a tunnel endpoint identifier TEID field of the plaintext packet, where the ciphertext IPv6 packet is a packet obtained by encrypting the plaintext packet. The processing unit is further configured to perform hash calculation based on the filled Flow Label field of the ciphertext IPv6 packet and a first parameter involved in hash calculation to obtain a first hash value; and determine a transmission path of the ciphertext IPv6 packet based on the first hash value.

With reference to the fourth aspect, in some implementations of the fourth aspect, the plaintext packet is an IPv6 packet or an IPv4 packet. The processing unit is configured to fill N bits of the TEID field into N bits of the Flow Label field of the ciphertext IPv6 packet, where the Flow Label field of the ciphertext IPv6 packet includes N bits; or perform hash calculation on the TEID field and the first parameter to obtain a second hash value, and fill N bits of the second hash value into N bits of the Flow Label field of the ciphertext IPv6 packet, where the Flow Label field of the ciphertext IPv6 packet includes N bits.

With reference to the fourth aspect, in some implementations of the fourth aspect, the plaintext packet is an IPv6 packet or an IPv4 packet, and the Flow Label field of the ciphertext IPv6 packet includes a first field and a second field. The processing unit is configured to intercept, from the TEID field, a part with a length the same as that of the first field or the second field of the Flow Label field of the ciphertext IPv6 packet, to fill the first field or the second field of the Flow Label field of the ciphertext IPv6 packet; or perform hash calculation on the TEID field and the first parameter to obtain a third hash value, and intercept, from the third hash value, a part with a length the same as that of the first field or the second field of the Flow Label field of the ciphertext IPv6 packet, to fill the first field or the second field of the Flow Label field of the ciphertext IPv6 packet.

With reference to the fourth aspect, in some implementations of the fourth aspect, the plaintext packet is an IPv6 packet, and the processing unit is configured to:
fill a flow label Flow Label field of the plaintext IPv6 packet based on the tunnel endpoint identifier TEID field of the plaintext IPv6 packet; and copy the filled flow label Flow Label field of the plaintext IPv6 packet to the flow label Flow Label field of the ciphertext IPv6 packet.

With reference to the fourth aspect, in some implementations of the fourth aspect, the plaintext packet is an IPv6 packet. When the plaintext packet is fragmented into a plurality of chips, the processing unit is further configured to fill a flow label Flow Label field of the plaintext IPv6 packet based on the tunnel endpoint identifier TEID field of the plaintext IPv6 packet; fragment the plaintext IPv6 packet filled with the Flow Label field into a plurality of chips, where each of the plurality of chips includes the filled Flow Label field; and copy the Flow Label field of each chip to a Flow Label field of an encrypted ciphertext packet of each chip; perform hash calculation based on the Flow Label field of the ciphertext packet and the first parameter to obtain a fourth hash value; and determine a transmission path of each ciphertext packet based on the fourth hash value.

With reference to the fourth aspect, in some implementations of the fourth aspect, the processing unit is configured to fill N bits of the TEID field into N bits of the Flow Label field of the plaintext IPv6 packet, where the Flow Label field of the plaintext IPv6 packet includes N bits; or perform hash calculation on the TEID field and a second parameter to obtain a fifth hash value, and fill N bits of the fifth hash value into N bits of the Flow Label field of the plaintext IPv6 packet, where the Flow Label field of the plaintext IPv6 packet includes N bits.

With reference to the fourth aspect, in some implementations of the fourth aspect, the Flow Label field of the plaintext IPv6 packet includes a first field and a second field. The processing unit is configured to intercept, from the TEID field, a part with a length the same as that of the first field or the second field of the Flow Label field of the plaintext IPv6 packet, to fill the first field or the second field of the Flow Label field of the plaintext IPv6 packet; or perform hash calculation on the TEID field and a second parameter to obtain a sixth hash value, and intercept, from the sixth hash value, a part with a length the same as that of the first field or the second field of the Flow Label field of the plaintext IPv6 packet, to fill the first field or the second field of the Flow Label field of the plaintext IPv6 packet.

With reference to the fourth aspect, in some implementations of the fourth aspect, the plaintext packet is an IPv4 packet or an IPv6 packet. When the plaintext packet is fragmented into a plurality of chips, the processing unit is further configured to fragment the plaintext packet into the plurality of chips; encrypt each of the plurality of chips to obtain a ciphertext packet of each chip; fill a Flow Label field of the ciphertext packet of each chip based on the tunnel endpoint identifier TEID field of the plaintext packet; perform hash calculation based on the Flow Label field of the ciphertext packet and the first parameter to obtain a seventh hash value; and determine a transmission path of each ciphertext packet based on the seventh hash value.

With reference to the fourth aspect, in some implementations of the fourth aspect, the processing unit is further configured to fill N bits of the TEID field into N bits of the Flow Label field of the ciphertext packet of each chip, where the Flow Label field of the ciphertext packet of each chip includes N bits; or perform hash calculation on the TEID field and the first parameter to obtain an eighth hash value, and fill N bits of the eighth hash value into N bits of the Flow Label field of the ciphertext packet of each chip, where the Flow Label field of the ciphertext packet of each chip includes N bits.

With reference to the fourth aspect, in some implementations of the fourth aspect, the Flow Label field of the ciphertext packet of each chip includes a first field and a second field. The processing unit is further configured to intercept, from the TEID field, a part with a length the same as that of the first field or the second field of the Flow Label field of the ciphertext packet of each chip, to fill the first field or the second field of the Flow Label field of the ciphertext packet of each chip; or perform hash calculation on the TEID field and the first parameter to obtain a ninth hash value, and intercept, from the ninth hash value, a part with a length the same as that of the first field or the second field of the Flow Label field of the ciphertext packet of each chip, to fill the first field or the second field of the Flow Label field of the ciphertext packet of each chip.

With reference to the fourth aspect, in some implementations of the fourth aspect, the first parameter includes at least one of the following parameters: an SIP of the ciphertext packet, a DIP of the ciphertext packet, and a Next Header of the ciphertext packet.

With reference to the fourth aspect, in some implementations of the fourth aspect, the second parameter includes at least one of the following parameters: an SIP of the plaintext packet, a DIP of the plaintext packet, a source port SPt of the plaintext packet, a destination port DPt of the plaintext packet, and a Next Header of the plaintext packet.

According to a fifth aspect, a communication apparatus is provided. The communication apparatus includes a processor. The processor is connected to a memory, and the memory is configured to store a computer program. The processor is configured to execute the computer program stored in the memory, so that the apparatus performs the method in any one of the first aspect or the possible implementations of the first aspect, or the method in any one of the second aspect or the possible implementations of the second aspect.

According to a sixth aspect, a computer-readable storage medium is provided. The computer-readable storage medium stores a computer program. When being executed, the computer program is used to perform the method in any one of the first aspect or the possible implementations of the first aspect, or the method in any one of the second aspect or the possible implementations of the second aspect.

According to a seventh aspect, a chip is provided. The chip includes a processor and an interface. The processor is configured to read instructions to perform the method in any one of the first aspect or the possible implementations of the first aspect, or the method in any one of the second aspect or the possible implementations of the second aspect.

Optionally, the chip may further include a memory. The memory stores instructions. The processor is configured to execute the instructions stored in the memory or instructions from another module.

According to an eighth aspect, a communication system is provided. The system includes an apparatus with functions for implementing the methods and possible designs in the first aspect, and an apparatus with functions for implementing the methods and possible designs in the second aspect.

### BRIEF DESCRIPTION OF DRAWINGS

FIG. 1 is a schematic diagram of an application scenario according to an embodiment of this application;
FIG. 2 is a schematic diagram of an end-to-end load balancing behavior according to an embodiment of this application;
FIG. 3 is a schematic flowchart of forwarding data packets of a same session on a same path for avoidance of out of order of packets according to an embodiment of this application;
FIG. 4 is a schematic flowchart of an Internet Protocol version IPv6-based wireless network communication method according to an embodiment of this application;
FIG. 5 is a schematic diagram of a basic format of an IPv6 packet;
FIG. 6a is a schematic diagram of a first chip obtained by fragmenting an IPv6 packet according to an embodiment of this application;
FIG. 6b is a schematic diagram of a second chip obtained by fragmenting an IPv6 packet according to an embodiment of this application;
FIG. 7 is a schematic flowchart of another Internet Protocol version IPv6-based wireless network communication method according to an embodiment of this application;
FIG. 8a shows a filling manner in an IPsec AH encapsulation scenario;
FIG. 8b shows a filling manner in an IPsec ESP encapsulation scenario;
FIG. 9 is a schematic diagram of a basic format of an IPv4 packet;
FIG. 10 is a schematic diagram of a plaintext scenario of using an Ethernet link aggregation technology for load balancing according to an embodiment of this application;
FIG. 11 is a schematic diagram of a ciphertext scenario of using an Ethernet link aggregation technology for load balancing according to an embodiment of this application;
FIG. 12 is a schematic diagram of equal-cost route load balancing in a plaintext scenario according to an embodiment of this application;
FIG. 13 is a schematic diagram of equal-cost route load balancing in a plaintext scenario for reliability improvement according to an embodiment of this application;
FIG. 14 is a schematic block diagram of a communication apparatus according to an embodiment of this application; and
FIG. 15 is a schematic diagram of a structure of an access network device according to this application.

### DESCRIPTION OF EMBODIMENTS

The following describes technical solutions of this application with reference to accompanying drawings.

The technical solutions of embodiments of this application may be used in various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a fifth generation (5th generation, 5G) system or a new radio (new radio, NR) system. In addition, the communication system may be further used in a subsequent evolved system, for example, a sixth generation 6G communication system or even a more advanced seventh generation 7G communication system.

An access network device in embodiments of this application may be a device for communicating with a terminal device, may be a base station, an access point, or a network device, or may be a device that communicates with a wireless terminal over an air interface in an access network via one or more sectors. A network device may be configured to mutually convert a received over-the-air frame and an IP packet and serve as a router between a wireless terminal and a rest portion of the access network, where the rest portion of the access network may include an Internet protocol (IP) network. The network device may further coordinate attribute management of the air interface. For example, the access network device may be a base station (Base Transceiver Station, BTS) in a global mobile for mobile communications (Global System for Mobile communications, GSM) system or a code division multiple access (Code Division Multiple Access, CDMA) system, or may be a base station (NodeB, NB) in a wideband code division multiple access (Wideband Code Division Multiple Access, WCDMA) system, or may be an evolved NodeB (evolved NodeB, eNB or eNodeB) in an LTE system, or may be a radio controller in a cloud radio access network (cloud radio access network, CRAN) scenario. Alternatively, the access device may be network device in a relay station, an access point, a vehicle-mounted device, a wearable device, an access device in a 5G network, a network device in a future evolved PLMN network, or the like, may be an access point (access point, AP) in a WLAN, or may be a gNB in a new radio (new radio, NR) system. This is not limited in embodiments of this application. It should be noted that, in a 5G system, there may be one or more transmission reception points (Transmission Reception Point, TRP) on one base station. All TRPs belong to a same cell, and a measurement reporting method described in embodiments of this application may be used for each of the TRPs and the terminal. In another scenario, the network device may be further divided into a control unit (Control Unit, CU) and a data unit (Data Unit, DU). There may be a plurality of DUs under one CU. The measurement reporting method described in embodiments of this application may be used for each DU and the terminal. A difference between the CU-DU separation scenario and the multi-TRP scenario lies in that a TRP only serves as a radio unit or an antenna device, but a DU may implement a protocol stack function, for example, the DU may implement a physical layer function.

In addition, in embodiments of this application, the access network device is a device in an access network (radio access network, RAN), or in other words, a RAN node that connects the terminal device to a wireless network. For example, by way of example, rather than limitation, an access network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), a wireless fidelity (wireless fidelity, Wi-Fi) access point (access point, AP), or the like.

The access network device provides services for a cell. The terminal device communicates with the access network device using a transmission resource (for example, a frequency domain resource, or in other words, a spectrum resource) used by the cell. The cell may be a cell corresponding to the access network device (for example, a base station), and the cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

In embodiments of this application, a core network device may be connected to the access network device, so that the terminal device can communicate with the core network device via the access network device. For example, the core network device may include the following network elements or functions:

An access management function (access management function, AMF) is mainly responsible for access and mobility control, including registration management (registration management, RM) and connection management (connection management, CM), access authentication and access authorization, reachability management, mobility management, and the like.

A user plane function (user plane function, UPF) mainly provides user plane support, including a connection point between a PDU session and a data network, data packet routing and forwarding, data packet detection and user plane policy enforcement, QoS handling for a user plane, downlink data packet buffering, downlink data notification triggering, and the like.

A packet control function (packet control function, PCF) mainly provides a policy control function, including supporting unified policy frameworks to govern network behavior and providing policy rules to control planes to enforce them.

An authentication service function (authentication server function, AUSF) is mainly responsible for providing security-related functions, such as authentication and authorization.

A unified data management (unified data Management, UDM) is responsible for functions related to user authentication and authorization, including authentication credential handling, user identification handling, subscription information management, access authorization, and the like.

Session: A session is a basic unit of a service. A service may include one or more sessions. It is important that strict order preserving is required for packets in one session, but not required for packets in different sessions. The communication term "flow" may be equivalent to the communication term "session" in embodiments of this application. Both the flow and the session mentioned in embodiments of this application are unidirectional. In this specification, a session may be understood as a set of all packets with same "hash values" of 3-tuples.

Bearer: A public data network (Public Data Network, PDN) connection is a tunnel between UE and a PGW, and an evolved packet system (Evolved Packet System, EPS) bearer is a smaller tunnel included in the PDN connection. The PDN connection is for IP connectivity. In a same PDN connection, different EPS bearers represent different quality of service. While a PDN connection is set up, one EPS bearer is set up, which is referred to as a default bearer. In the same PDN connection, a subsequently set up EPS bearer is referred to as a dedicated bearer. Data packets in a same direction of a bearer have a same TEID value (which is in a GTP header). If there is only the default bearer, it can be simply considered that one UE corresponds to one bearer. The concept of bearer is not used in 5G, but a "PDU session" is used instead. In embodiments of this application, a 4G bearer or a 5G PDU session may be used. The term bearer is used below for description.

Hash algorithm: A mapping rule for mapping a binary string of any length to a binary string of a fixed length is referred to as a hash algorithm, and a binary value obtained through original data mapping is referred to as a hash value. The hash algorithm has the following features:
1. Unidirectional and difficult to deduce original data reversely, so that an original data cannot be deduced reversely from a hash value.
2. Sensitive to input data and having an avalanche effect. Even if only one bit is modified, obtained hash values are the same.
3. Having a low probability in hash collision. If hash keys are different, there is a low probability that calculated hash values are the same.

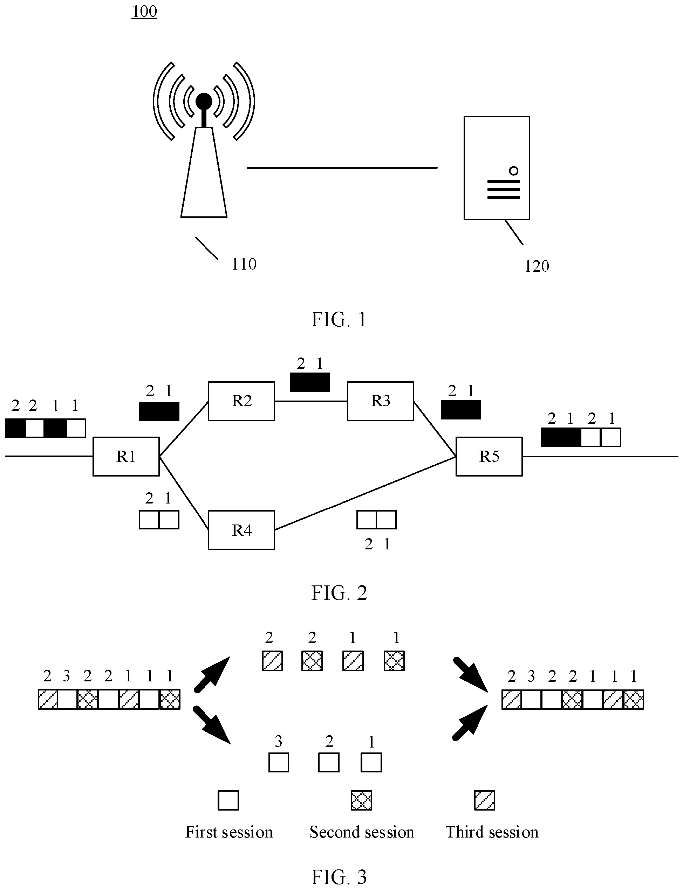

FIG. 1 is a schematic diagram of an application scenario 100 according to an embodiment of this application. In FIG. 1, an access network device 110 and a core network device 120 are included. The access network device 110 works, for example, in an evolved universal mobile telecommunications system terrestrial radio access (evolved UMTS terrestrial radio access, E-UTRA) system, or in an NR system, or in a next-generation communication system or another communication system. In the communication system, the access network device 110 and the core network device 120 may transmit data to each other, and accordingly the communication system is also referred to as a wireless backhaul network.

In FIG. 1, the access network device is, for example, a base station. The access network device corresponds to different devices in different systems. For example, the access network device may correspond to an eNB in a 4G system, and correspond to a 5G access network device such as a gNB in a 5G system. The technical solutions provided in embodiments of this application may also be applied to a future mobile communication system. Accordingly, the access network device in FIG. 1 may correspond to an access network device in the future mobile communication system. In FIG. 1, an example in which the access network device is a base station is used. Actually, for the access network device, refer to the foregoing description.

It should be understood that the communication system shown in FIG. 1 may further include more network nodes, for example, devices such as a terminal device, another access network device, a security gateway, and a switch. The access network device or the core network device included in the communication system shown in FIG. 1 may be the access network device or the core network device in the foregoing various forms. Details are not shown one by one in the figure in this embodiment of this application.

The technical solutions in this application may also be applied to another communication system. The communication system shown in FIG. 1 imposes no limitation on this application.

When a data packet is transmitted at a network node, bandwidth may increase exponentially and higher reliability of data transmission can be achieved by using a combination of an Institute of Electrical and Electronics Engineers ((Institute of Electrical and Electronics Engineers, IEEE) 802.3ad) (IEEE 802.3ad is a standard method for performing link aggregation) Ethernet link aggregation technology and an equal-cost route load balancing technology. If there are a plurality of transmission paths at a network node, a plurality of data packets of the node need to be evenly distributed on the paths to maximize bandwidth utilization. In addition, data packets of a same session need to be forwarded on a same path to ensure that the data packets of the same session or flow are not out of order. In a multi-path scenario, if data packets of a session are evenly distributed on a plurality of paths for forwarding, out-of-order may occur, which may impair normal functions and performance of the session. Therefore, order preserving is required for data packets of a same session in the communication industry.

FIG. 2 shows an end-to-end load balancing behavior. There are two paths for forwarding at a forwarding node R1. A first session is represented by black blocks, and a second session is represented by white blocks. A data packet of the first session arrives at a forwarding node R5 through a forwarding node R2 and a forwarding node R3, and a data packet of the second session arrives at the forwarding node R5 through a forwarding node R4. Data packets of a same session are forwarded on a same path to ensure that the data packets of the same session are not out of order. The forwarding nodes in FIG. 2 may be forwarding nodes between the access network device and the core network device shown in FIG. 1. For example, a data link between the access network device and the core network device includes forwarding nodes R1, R2, R3, R4, and R5.

The following further describes, with reference to FIG. 3, a reason why data packets of a same session are forwarded on a same path to ensure that the data packets of the same session are not out of order. FIG. 3 is a schematic flowchart of forwarding data packets of a same session on a same path to ensure that the data packets of the same session are not out of order. Numbers in FIG. 3 represent sequence numbers of data packets in respective sessions. FIG. 3 shows three sessions: a first session, a second session, and a third session. Using the first session as an example, a sequence of data packets of the first session before forwarding is 1, 2, and 3, and a sequence of data packets of the first session after forwarding is still 1, 2, and 3 without disorder. Conversely, if the data packets of the same session are forwarded through different paths, the data packets may be out of order, for example, an order of data packets is 3, 1, and 2, affecting service performance.

In the IPv4 era, a 5-tuple (for example, which may include a source IP address (Source IP, SIP), a destination IP address (Destination IP, DIP), a transport layer protocol (Protocol, Prot), a source port (Source Port, SPt), and a destination port (Destination Port, DPt)) is usually used to determine whether data packets belong to a same session. To be specific, hash calculation is performed on a 5-tuple of an IPv4 packet, and if hash calculation results of two data packets are consistent, the two data packets belong to a same session. A process of calculating different hash values may also be referred to as hashing. More different hash values indicate that hashing is more adequate. From a statistical perspective, it is easier to evenly forward data packets on a plurality of paths for full bandwidth utilization.

The network node performs calculation on all data packets to obtain 5-tuple hash values of the data packets. Each hash value uniquely represents a session. To ensure order preserving of data packets of the same session during forwarding, packets with a same hash value may be forwarded on a same path, and packets with different hash values may be forwarded on a plurality of paths.

With reference to FIG. 3 and Table 1, a relationship among a 5-tuple, a hash value, and a session, and a load balancing behavior are further explained. The first session, the second session, and the third session can be intuitively seen from FIG. 3. The following table shows hash values obtained by performing hash calculation based on a 5-tuple of each session. Each part of the 5-tuple is a hash key. Five hash keys are used to obtain the hash value by using a hash algorithm. One or more different fields in the 5-tuple may cause different hash values. A hash value uniquely identifies a session. Data packets of a same session may be forwarded on one path, and data packets of different sessions may be forwarded on different paths. This ensures that an order of data packets in any session is preserved on both a source node and a destination node.

**Table 1 Hash values calculated based on a 5-tuple**

| Session | SIP | DIP | Prot | Spt | Dpt | Hash value |
|---|---|---|---|---|---|---|
| First session | 1:1:1 | 2:2:1 | UDP | 2152 | 2152 | 123 |
| Second session | 1:1:2 | 2:2:1 | UDP | 2152 | 2152 | 456 |
| Third session | 1:1:3 | 2:2:1 | UDP | 2152 | 2152 | 789 |

For a load balancing algorithm for forwarding IPv6 data packets on a plurality of paths, according to the IETF-RFC 6437 specification (that is, the Internet Engineering Task Force (The Internet Engineering Task Force, IETF) Request for Comments (Request For Comments, RFC), where the RFC is released by the Internet Engineering Task Force (IETF)), packet distribution may be performed based on a 3-tuple (for example, which may include an SIP, a DIP, and a flow label Flow_Label) hash. However, an IPv6 Flow_Label field is openly used in the industry and has no common usage, and there is no mandatory requirement on the IPv6 Flow_Label field in the standard. Currently, a solution is to set all 20 bits of the Flow_Label to 0. Therefore, if packet distribution is performed based on the 3-tuple (including the SIP, the DIP, and the flow label Flow_Label) hash, it is determined that transmission paths of many data packets are the same. This greatly wastes bandwidth.

In the current technology, packet distribution is performed on IPv6 packets based on a 5-tuple (SIP, DIP, Next Header, SPt, and Dpt) hash, that is, a plurality of IPv6 packets are forwarded on different paths. Even if the 5 -tuple hash is used for distribution of the IPv6 packets, load balancing cannot be fully implemented in the following scenarios.

For example, in a typical IPv6-based scenario including one public data network (Public Data Network Gateway, PGW)/user plane function (User Plane Function, UPF) plus one local service, the PGW/UPF is configured with an IPv6 address, and a base station is configured with an IPv6 address. Therefore, content of 3-tuples or 5-tuples of all data packets is the same, and hash values calculated based on the 3-tuples or 5-tuples of all the data packets are the same, as shown in Table 2. As a result, the data packets cannot be hashed, and are all forwarded on a same path, resulting in a load balancing failure and wasting bandwidth of idle paths.

**Table 2 Completely same hash values of data packets of different users**

| Session | SIP | DIP | Next header | Spt | Dpt | Hash value |
|---|---|---|---|---|---|---|
| User 1 | Base station IPv6 | Core network IPv6 | UDP | 2152 | 2152 | 123 |
| User 2 | Base station IPv6 | Core network IPv6 | UDP | 2152 | 2152 | 123 |
| User 3 | Base station IPv6 | Core network IPv6 | UDP | 2152 | 2152 | 123 |
| User 4 | Base station IPv6 | Core network IPv6 | UDP | 2152 | 2152 | 123 |
| User 5 | Base station IPv6 | Core network IPv6 | UDP | 2152 | 2152 | 123 |

In another example, in an IPv6-based scenario including a plurality of public data gateways PGWs/user plane functions UPFs plus a plurality of local services, the PGWs/UPFs are configured with two IPv6 addresses: IPv6_1 and IPv6_2. A base station is also configured with two IPv6 addresses: IPv6_1 and IPv6_2. Hash values of 3-tuples or 5-tuples of all data packets can be distinguished in a limited manner, as shown in Table 3. However, a quantity of IPv6 addresses configured for the PGW/UPF/base station is limited, so that the data packets cannot be fully hashed. As a result, traffic cannot be evenly distributed on a plurality of paths, and load balancing performance is inadequate. The base station IP v6_1 shown in Table 3 is a plaintext IPv6 address.

**Table 3 Only two hash values calculated for data packets of different users**

| Session | SIP | DIP | Next header | Spt | Dpt | Hash value |
|---|---|---|---|---|---|---|
| User 1 | Base station IPv6_1 | Core network IPv6_1 | UDP | 2152 | 2152 | 123 |
| User 2 | Base station IPv6_2 | Core network IPv6_2 | UDP | 2152 | 2152 | 456 |
| User 3 | Base station IPv6_1 | Core network IPv6_1 | UDP | 2152 | 2152 | 123 |
| User 4 | Base station IPv6_2 | Core network IPv6_2 | UDP | 2152 | 2152 | 456 |
| User 5 | Base station IPv6_1 | Core network IPv6_1 | UDP | 2152 | 2152 | 123 |

In another example, in an IPv6 Internet security protocol (Internet Protocol Security, IPsec) scenario, one pair of Internet key exchange (Internet Key Exchange, IKE) IPv6 addresses (that is, ciphertext IPv6 addresses described in this specification) are used. Values of SIPs and DIPs of encrypted data packets of different users are all the same. Therefore, hash values of ciphertexts of encrypted data packets of all users are the same (no SPt or DPt field exists in IPsec packets regardless of using ESP encapsulation or AH encapsulation), as shown in Table 4. As a result, the data packets cannot be hashed, resulting in a load balancing failure. A local tunnel IP address in Table 4 is a ciphertext IPv6 address.

**Table 4 Completely same hash values of encrypted data packets of different users**

| Session | SIP | DIP | Next header | Spt | Dpt | Hash value |
|---|---|---|---|---|---|---|
| User 1 | Local tunnel IPv6 address | Peer tunnel IPv6 address | ESP/AH | N/A | N/A | 123 |
| User 2 | Local tunnel IPv6 address | Peer tunnel IPv6 address | ESP/AH | N/A | N/A | 123 |
| User 3 | Local tunnel IPv6 address | Peer tunnel IPv6 address | ESP/AH | N/A | N/A | 123 |
| User 4 | Local tunnel IPv6_1 address | Peer tunnel IPv6_1 address | ESP/AH | N/A | N/A | 123 |
| User 5 | Local tunnel IPv6_1 address | Peer tunnel IPv6_1 address | ESP/AH | N/A | N/A | 123 |

In another example, a path maximum transmission unit (path Maximum Transmission Unit, PMTU) mechanism is introduced in IPv6, so that fragmentation in IPv6 is uncontrollable compared with that of in IPv4. In a scenario of IPv6 source packet fragmentation, after a source packet is fragmented, a first chip retains complete header information of the source packet, and subsequent chips have only IPv6 headers but no user datagram protocol (User Datagram Protocol, UDP) headers. If a 5-tuple hash is used, a hash value of the first chip is different from those of subsequent chips, and different fragmentation packets are forwarded on different paths, resulting in disorder of packets in a same session. As shown in Table 5, after a data packet of a user is fragmented, a second chip loses UDP header information. Therefore, a hash value of the second chip is different from that of a first chip. As a result, the fragmentation packets are forwarded on two paths and may arrive at an aggregation node in disorder, that is, the second chip arrives at a destination before the first chip, affecting performance.

**Table 5 Different hash values of fragmentation data packets of users**

| Session | SIP | DIP | Next header | Spt | Dpt | Hash value |
|---|---|---|---|---|---|---|
| First chip of a packet of a user 1 | Base station IPv6 | Core network IPv6 | UDP | 2152 | 2152 | 123 |
| Second chip of a packet of a user 1 | Base station IPv6 | Core network IPv6 | UDP | N/A | N/A | 456 |

Currently, in the current technology, a plurality of SIPs or DIPs can only be deployed at a source or destination end of a backhaul network for hashing. Details are as follows. In a plaintext scenario, it is recommended that multi-service IPv6 is configured at a local end to make a difference in SIPs/DIPs to result in a difference in hash values. In addition, there are requirements for a quantity of SIPs/DIPs.

As shown in Table 3, in the system shown in Table 3, two addresses are deployed on an access network device, and two addresses are deployed on a core network device. Therefore, hash values of data packets of different users are different, and load balancing may succeed, but may also fail. In an implementation of mapping between a hash value and a selected path, after a hash value is obtained through multi-tuple hashing, modulo calculation is performed for path mapping. For example, in dual-path load balancing, modulo 2 calculation is performed. That is, a hash value is divided by 2 to obtain a remainder. If the result is 0, PATH1 is selected, and if the result is 1, PATH2 is selected. In three-path load balancing, modulo 3 calculation is performed. That is, a hash value is divided by 3 to obtain a remainder. If the result is 0, PATH1 is selected, if the result is 1, PATH2 is selected, and if the result is 2, PATH3 is selected. Other cases are deduced by analogy. It needs to be ensured that results obtained through hash and modulo calculation using the plurality of SIPs/DIPs are different. Otherwise, load balancing cannot be implemented. Therefore, adequate consideration and advance calculation are required for SIP/DIP planning, to avoid the load balancing failure because results obtained by performing modulo calculation on hash values obtained through multi-tuple hash calculation are unique. As shown in Table 6, two IPv6 addresses are deployed on a base station. However, due to improper address selection, although hash values of data packets of different users are different, results obtained through modulo calculation are the same, resulting in a load balancing failure.

**Table 6 Failed load balancing in the scenario of deploying two IPv6 addresses on a base station**

| Session | SIP | DIP | Next Header | Spt | Dpt | Hash value | Modulo 2 calculation | Path |
|---|---|---|---|---|---|---|---|---|
| User 1 | Base station IPv6_1 | Core network IPv6_1 | UDP | 2152 | 2152 | 123 | 1 | 2 |
| User 2 | Base station IPv6_2 | Core network IPv6_1 | UDP | 2152 | 2152 | 345 | 1 | 2 |
| User 3 | Base station IPv6_1 | Core network IPv6_1 | UDP | 2152 | 2152 | 123 | 1 | 2 |
| User 4 | Base station IPv6_2 | Core network IPv6_1 | UDP | 2152 | 2152 | 345 | 1 | 2 |
| User 5 | Base station IPv6_1 | Core network IPv6_1 | UDP | 2152 | 2152 | 123 | 1 | 2 |

As shown in Table 7, two IPv6 addresses are deployed on a base station. The selected addresses are calculated in advance. Hash values of data packets of different users are different, and results obtained through modulo operation are also different. Therefore, load balancing succeeds.

**Table 7 Successful load balancing in the scenario of deploying two IPv6 addresses on a base station**

| Session | SIP | DIP | Next Header | Spt | Dpt | Hash value | Modulo 2 calculation | Path |
|---|---|---|---|---|---|---|---|---|
| User 1 | Base station IPv6_1 | Core network IPv6_1 | UDP | 2152 | 2152 | 123 | 1 | 2 |
| User 2 | Base station IPv6_3 | Core network IPv6_1 | UDP | 2152 | 2152 | 456 | 0 | 1 |
| User 3 | Base station IPv6_1 | Core network IPv6_1 | UDP | 2152 | 2152 | 123 | 1 | 2 |
| User 4 | Base station IPv6_3 | Core network IPv6_1 | UDP | 2152 | 2152 | 456 | 0 | 1 |
| User 5 | Base station IPv6_1 | Core network IPv6_1 | UDP | 2152 | 2152 | 123 | 1 | 2 |

Similarly, in the current technology, in an IPv6 Internet Protocol Security IPsec scenario, a plurality of IPv6 addresses of a security gateway or a plurality of IPv6 addresses of a local end (both the plurality of IPv6 addresses of the security gateway and the plurality of IPv6 addresses of the local end refer to outer tunnel ciphertext IPv6 addresses) are configured to make a difference in SIPs/DIPs to result in a difference in hash values. In addition, there are requirements for a quantity of SIPs/DIPs.

In the technology, additional IPv6 addresses need to be deployed for users, and non-uniqueness of modulo obtained through multi-tuple hash calculation needs to be fully ensured. This may interrupt networking design, evolution solution, and address planning, increase costs, impair product competitiveness, and cause serious hash inadequacy. For example, if two SIPs are configured on a base station, only two hash values can be hashed using a hash algorithm, and load balancing is performed on two corresponding paths. This may cause severe inequivalence in load balancing (which means that one path has an extremely large traffic volume and the other path has an extremely small traffic volume). As a result, bandwidth resources cannot be fully utilized, load balancing impairs, and reliability depends on a detection mechanism of a transport layer (that is, Layer 4 protocol). A control plane detects links depending on an SCTP Heartbreak mechanism. If a link is faulty, it takes 45 to 50 seconds for converge, where 45 to 50 are typical values and can be changed through configuration. A data plane detects links depending on a GTP-U Echo mechanism. If a link is faulty, it takes 15 to 75 seconds for converge, where 15 to 75 are typical values and can be changed through configuration. When path switching resulting from path fault occurs, services are interrupted for a long time, affecting service experience and deteriorating reliability.

In view of this, this application provides an Internet Protocol version IPv6-based wireless network communication method, to implement hashing on a per bearer basis without adding SIP/DIP, so as to fully utilize bandwidth resources.

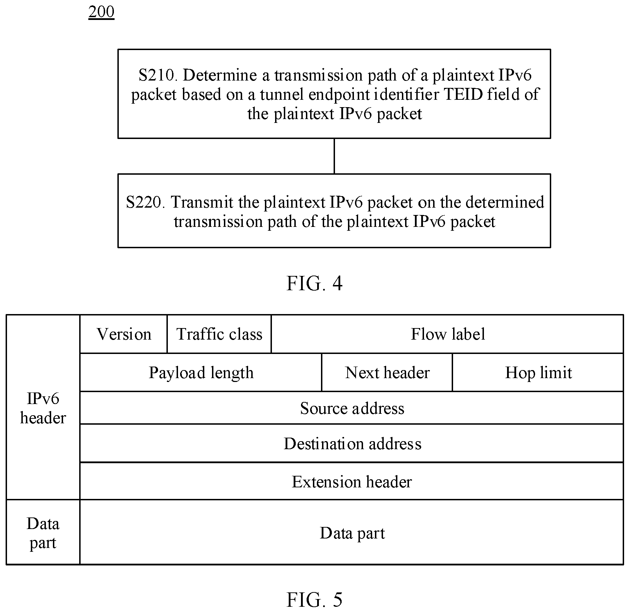

An Internet Protocol version IPv6-based wireless network communication method provided in this application is described in detail below with reference to FIG. 4. FIG. 4 is a schematic flowchart of an Internet Protocol version IPv6-based wireless network communication method 200 according to an embodiment of this application. The method 200 may be applied to the scenario shown in FIG. 1, or certainly may be applied to another communication scenario. This is not limited in this embodiment of this application.

It should be further understood that, in this embodiment of this application, the method is described by using an example in which the method is performed by an access network device and a core network device. By way of example but not limitation, the method may alternatively be performed by chips, chip systems, processors, or the like used in the access network device and the core network device.

As shown in FIG. 4, the method 200 shown in FIG. 4 may include S210 and S220. The steps in the method 200 are described in detail below with reference to FIG. 4.

S210. Determine a transmission path of a plaintext IPv6 packet based on a tunnel endpoint identifier TEID field of the plaintext IPv6 packet.

S220. Transmit the plaintext IPv6 packet on the determined transmission path of the plaintext IPv6 packet.

The transmission path of the plaintext IPv6 packet is determined based on the tunnel endpoint identifier TEID field of the plaintext IPv6 packet. The tunnel endpoint identifier TEID field is an identifier of a GTP tunnel, and a TEID field of each bearer (which is a PDU Session in 5G and is described as a bearer in the following without emphasis) is different. Therefore, the transmission path of the plaintext IPv6 packet is determined based on the tunnel endpoint identifier TEID field of the plaintext IPv6 packet, to ensure that IPv6 packets of a same bearer may be transmitted on a same path, and IPv6 packets of different bearers may be fully hashed for load balancing.

In this embodiment of this application, the plaintext IPv6 packet is a data service IPv6 packet, and a plaintext IPv4 packet is a data service IPv4 packet. A plaintext packet is only used to distinguish a ciphertext packet in an encryption scenario. A ciphertext IPv6 packet is a data service IPv6 packet obtained by encrypting the plaintext IPv6 packet or the plaintext IPv4 packet.

To understand this application more clearly, step S210 is described in detail below.

A basic format of an IPv6 packet is described first. FIG. 5 shows a basic format of an IPv6 packet. The IPv6 packet includes an IPv6 header and a payload. The IPv6 header includes:
IP Version (4 bits), where a value of this field is 6;
Traffic Class Traffic Class (8 bits);
Flow label Flow Label (20 bits), which is used to identify information about a bearer of an IPv6 data packet;
Payload length Payload Length (16 bits), where an extension header is also included in the payload length;
Next Header (8 bits), which is a new manner for segmentation, security, mobility, loose source routing, and route recording;
Hop limit Hop Limit (8 bits), which defines a maximum number of hops that an IP packet can pass through, and this value decreases by 1 for each hop;
Source address Source Address (128 bits);
Destination address Destination Address (128 bits); and
Extension header Extension Header(s) of a data packet.

A Flow Label field of the IPv6 header of the IPv6 packet shown in FIG. 5 is 0, and 3-tuple hash values are consistent. Therefore, load balancing cannot be implemented using the 3 -tuple. In this application, the transmission path of the plaintext IPv6 packet is determined based on the tunnel endpoint identifier TEID field of the plaintext IPv6 packet. Because tunnel endpoint identifier TEID fields of plaintext IPv6 packets of different bearers are different, determining the transmission path of the plaintext IPv6 packet based on the tunnel endpoint identifier TEID field of the plaintext IPv6 packet can ensure that packets of the bearer are forwarded on a same path, and the packets of the bearer are forwarded in sequence. In addition, hash values of different bearers are different, and the packets are fully hashed based on the different hash values, thereby implementing load balancing.

Optionally, step S210 includes: filling the tunnel endpoint identifier TEID field of the plaintext IPv6 packet into a flow label Flow Label field of the plaintext IPv6 packet; performing hash calculation based on the filled Flow Label field and a first parameter involved in hash calculation, to obtain a first hash value; and determining the transmission path of the plaintext IPv6 packet based on the first hash value.

Therefore, the tunnel endpoint identifier TEID field of the plaintext IPv6 packet is filled into the flow label Flow Label field of the plaintext IPv6 packet, and then hash calculation is performed based on the filled Flow Label field and the first parameter involved in hash calculation, to obtain the first hash value. Because the TEID field identifies a unique bearer, hash values of a same bearer are the same, and hash values of different bearers are different. The transmission path of the plaintext IPv6 packet is determined based on the first hash value, to ensure that packets of the bearer are forwarded on a same path, and the packets of the bearer are forwarded in sequence. In addition, hash values of different bearers are different, and the packets are fully hashed based on the different hash values, thereby implementing load balancing.

For example, in a dual-path scenario, as shown in Table 8, each of a base station and a core network is configured with an IPv6 address, but TEIDs of different users are different. A TEID field is used to fill a flow label (Flow Label) field, and a value of a filled Flow Label field for each user is different. A 3-tuple hash value is calculated based on the filled Flow Label field of each user, an SIP, and a DIP, to obtain different hash values. For example, a hash value of a user 1 is 321, a hash value of a user 2 is 432, a hash value of a user 3 is 543, a hash value of a user 4 is 654, and a hash value of a user 5 is 765. A modulo operation is performed on a plurality of different hash values for path selection, to obtain that a transmission path of the user 1 is PATH2, a transmission path of the user 2 is PATH1, a transmission path of the user 3 is PATH2, a transmission path of the user 4 is PATH1, and a transmission path of the user 5 is PATH2, implementing load balancing.

**Table 8 Load balancing in a dual-path scenario**

| Session | SIP | DIP | Flow Label | TEID | Hash value | Modulo 2 calculation result | Path selection |
|---|---|---|---|---|---|---|---|
| User 1 | Base station IPv6 | Core network IPv6 | 123 | 1234 | 321 | 1 | PATH2 |
| User 2 | Base station IPv6 | Core network IPv6 | 234 | 2345 | 432 | 0 | PATH1 |
| User 3 | Base station IPv6 | Core network IPv6 | 345 | 3456 | 543 | 1 | PATH2 |
| User 4 | Base station IPv6 | Core network IPv6 | 456 | 4567 | 654 | 0 | PATH1 |
| User 5 | Base station IPv6 | Core network IPv6 | 567 | 5678 | 765 | 1 | PATH2 |

It should be understood that the first parameter involved in hash calculation may include any one or more of the following parameters: an SIP of the plaintext IPv6 packet, a DIP of the plaintext IPv6 packet, a Next Header of the plaintext IPv6 packet, a source port SPt of the plaintext IPv6 packet, and a destination port DPt of the plaintext IPv6 packet.

In addition to obtaining the first hash value by performing hash calculation based on the filled Flow Label field and the first parameter involved in hash calculation, the first hash value may be calculated based on a 3-tuple (including the SIP of the plaintext IPv6 packet, the DIP of the plaintext IPv6 packet, and the filled Flow Label field). Alternatively, the first hash value is calculated based on a 6-tuple (including the SIP of the plaintext IPv6 packet, the DIP of the plaintext IPv6 packet, the Next Header of the plaintext IPv6 packet, the source port SPt of the plaintext IPv6 packet, the destination port DPt of the plaintext IPv6 packet, and the filled Flow Label field). This is not limited in this application. In this embodiment of this application, a 3-tuple is used as an example to describe how to determine a transmission path of a plaintext packet or a ciphertext packet.

The tunnel endpoint identifier TEID field of the plaintext IPv6 packet is filled into the flow label Flow Label field of the plaintext IPv6 packet. After the plaintext IPv6 packet filled with the flow label Flow Label field is received by an intermediate node, the intermediate node may also determine the transmission path of the plaintext IPv6 packet based on the 3-tuple. The intermediate node may also implement load balancing and implement appropriate allocation of computing resources on per bearer basis.

The tunnel endpoint identifier TEID field of the plaintext IPv6 packet is filled into the flow label Flow Label field of the plaintext IPv6 packet. After the plaintext IPv6 packet filled with the flow label Flow Label field is received by a receiver, if the receiver includes a plurality of computing processing units, the receiver may determine, based on the 3-tuple, a computing processing unit for processing the plaintext IPv6 packet, implementing appropriate allocation of computing resources of the receiver, and avoiding uneven configuration of computing units.

When the plaintext IPv6 packet needs to be divided into a plurality of chips, before the plaintext IPv6 packet is fragmented, the tunnel endpoint identifier TEID field of the plaintext IPv6 packet is filled into the flow label Flow Label field of the plaintext IPv6 packet, the plaintext IPv6 packet is fragmented, and then the filled flow label Flow Label field of the plaintext IPv6 packet is copied to each chip of the plaintext IPv6 packet, to ensure that 3 -tuple hash values of all fragments are the same.

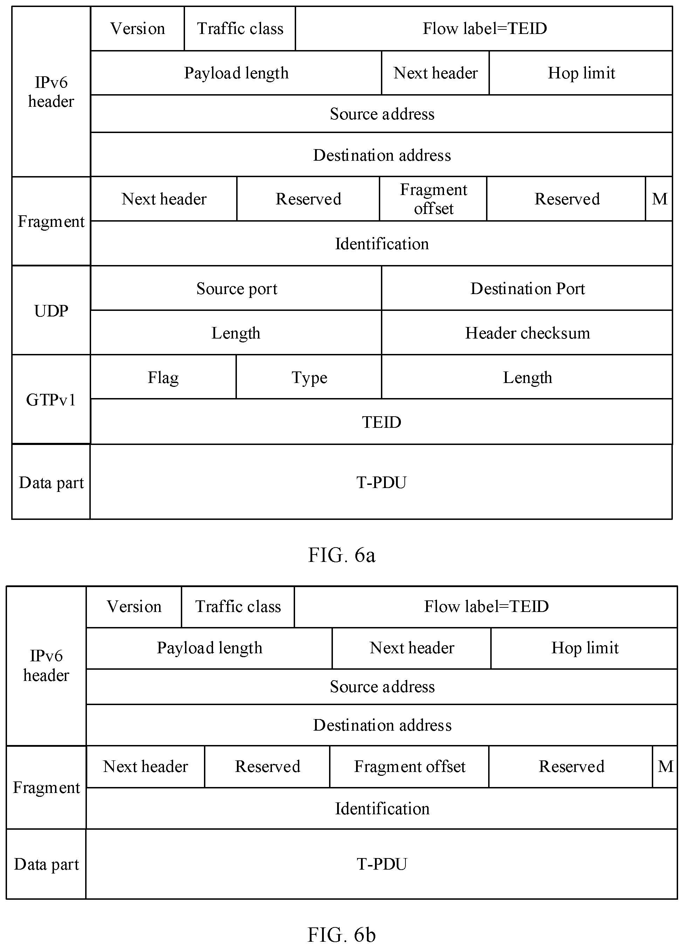

Specifically, in a plaintext IPv6 packet fragmentation scenario, before the plaintext IPv6 packet is fragmented, the tunnel endpoint identifier TEID field of the plaintext IPv6 packet is filled into the flow label Flow Label field of the plaintext IPv6 packet, and then the plaintext IPv6 packet is fragmented. The following specifically describes the plaintext IPv6 packet fragmentation scenario with reference to FIG. 6a, FIG. 6b, and Table 9.

FIG. 6a and FIG. 6b are schematic diagrams in which a data packet is divided into two fragmentation packets. Table 9 shows header information of the fragmentation packets of the data packet. In a wireless backhaul network, next-layer headers of the plaintext IPv6 packet are respectively a user datagram protocol (User Datagram Protocol, UDP) header and a general packet radio service tunneling protocol (General packet radio service Tunneling Protocol, GTPv1) header. As shown in FIG. 6a, an IPv6 packet shown in FIG. 6a includes an IPv6 header, a fragment extension header, a UDP header, a GTPv1 header, and a payload. The GTPv1 header is a type of a GTP header, and the GTPv1 header includes a tunnel endpoint identifier TEID field. When an IPv6 packet is fragmented, a first chip inherits a header of the original packet, and another chip only copies an IPv6 header. Before the IPv6 packet is fragmented, a tunnel endpoint identifier TEID field of the plaintext IPv6 packet is filled into a flow label Flow Label field of the plaintext IPv6 packet, the plaintext IPv6 packet is fragmented, and then the filled flow label Flow Label field of the plaintext IPv6 packet is copied to each chip obtained by fragmenting the plaintext IPv6 packet. FIG. 6a shows a first chip. The first chip includes an IPv6 header, a UDP header, a GTPv1 header, and a payload. FIG. 6b shows a second chip. The second chip includes an IPv6 header and a payload. FIG. 6a corresponds to a first chip of a packet in Table 9, and FIG. 6b corresponds to a second chip of the packet in Table 9. Content of flow label Flow Label fields in the IPv6 headers of the first chip and the second chip is the same. Therefore, hash results obtained by calculating 3-tuple hash values for the first chip and the second chip are the same, and it is determined, based on the hash results, that paths of the two packets are consistent.

**Table 9 Consistent transmission paths of fragmentation packets**

| Session | SIP | DIP | Flow Label | TEID | Hash value | Modulo 2 calculation result | Path selection |
|---|---|---|---|---|---|---|---|
| First chip of a packet | Base station IPv6 | Core network IPv6 | 123 | 1234 | 321 | 1 | PATH2 |
| Second chip of the packet | Base station IPv6 | Core network IPv6 | 123 | N/A | 321 | 1 | PATH2 |

The following specifically describes how to fill the tunnel endpoint identifier TEID field of the plaintext IPv6 packet into the flow label Flow Label field of the plaintext IPv6 packet.

In an implementation, N bits of the TEID field are filled into N bits of the Flow Label field, where the Flow Label field includes N bits; or hash calculation is performed on the TEID field and a first parameter to obtain a second hash value, and N bits of the second hash value are filled into N bits of the Flow Label field, where the Flow Label field includes N bits. In short, the flow label Flow Label field of the plaintext IPv6 packet is filled based on the TEID field. For example, the TEID field is 32 bits, and the Flow Label field is 20 bits. The N bits of the TEID field may be first 20 bits or last 20 bits of the TEID field, or 20 bits may be randomly selected or selected in a specific sequence from the TEID field.

It should be understood that, in this embodiment of this application, the first parameter used when hash calculation is performed based on the filled Flow Label field and the first parameter involved in hash calculation to determine the transmission path of the plaintext IPv6 packet may be the same as or different from the first parameter used when the Flow Label field is filled based on the second hash value (which is obtained by performing hash calculation on the TEID field and the first parameter).

In an implementation, the Flow Label field of the plaintext IPv6 packet includes a first field and a second field. Apart with a length the same as that of the first field or the second field of the Flow Label field is intercepted from the TEID field, to fill the first field or the second field of the Flow Label field. Alternatively, hash calculation is performed on the TEID field and the first parameter to obtain the second hash value, and a part with a length the same as that of the first field or the second field of the Flow Label field is intercepted from the second hash value, to fill the first field or the second field of the Flow Label field.

For example, the TEID field includes 32 bits, the Flow Label field includes 20 bits. The Flow Label field is divided into a first field and a second field, where the first field includes 18 bits, and the first field includes 2 bits. 18 bits may be intercepted from the TEID field and filled into the first field of the Flow Label field. Alternatively, hash calculation may be performed on the TEID field and the first parameter to obtain a second hash value, and 18 bits of the second hash value are intercepted to fill the first field of the Flow Label field.

It should be understood that one field of the Flow Label field is filled, and the other field is reserved. The reserved field may be used for another purpose, for example, used for a QoS identifier. This is not limited in this application.

It should be further understood that a quantity of bits of the first field and a quantity of bits of the second field may be set based on a specific application scenario. This is not limited in this application.

In an implementation, the first parameter includes at least one of the following parameters: an SIP of the plaintext IPv6 packet, a DIP of the plaintext IPv6 packet, a source port SPt of the plaintext IPv6 packet, a destination port DPt of the plaintext IPv6 packet, or a Next Header of the plaintext IPv6 packet.

To more clearly understand how to fill the tunnel endpoint identifier TEID field of the plaintext IPv6 packet into the flow label Flow Label field of the plaintext IPv6 packet, the following provides description according to a specific example.

For example, the last 20 bits of the TEID field are directly intercepted to fill the Flow Label field.

For example, after hash calculation is performed on the 3-tuple (including an SIP, a DIP, and a TEID), 20 bits are intercepted to fill the Flow Label field, or only 18 bits are intercepted to fill the Flow Label field and the first two bits are reserved.

For example, after hash calculation is performed on a 4-tuple (including an SIP, a DIP, a Next Header, and a TEID), 20 bits are intercepted for filling, or only 18 bits are intercepted for filling and the first two bits are reserved.

For example, after hash calculation is performed on a 6-tuple (including an SIP, a DIP, a Next Header, a SPt, a DPt, and a TEID), 20 bits are intercepted for filling, or only 18 bits are intercepted for filling and the first two bits are reserved.

The foregoing describes how to implement flow load balancing on per bearer basis by filling a Flow Label field in an IPv6 plaintext scenario. The following describes in detail how to implement flow load balancing on per bearer basis by filling a Flow Label field in an IPv6 IPsec tunnel mode ciphertext scenario.

In a wireless backhaul network, in the IPv6 IPsec tunnel mode ciphertext scenario, uplink data is encrypted by an access network device, and downlink data is encrypted by a security gateway (Security Gateway, SeGW). A core network device may also encrypt downlink data. However, this increases a calculation amount of the core network device. Therefore, downlink data is generally encrypted by the SeGW.

In the IPv6 IPsec tunnel mode ciphertext scenario, a plaintext packet (inner packet) can be an IPv6 packet or an IPv4 packet, and a ciphertext packet (outer packet) can be an IPv6 packet.

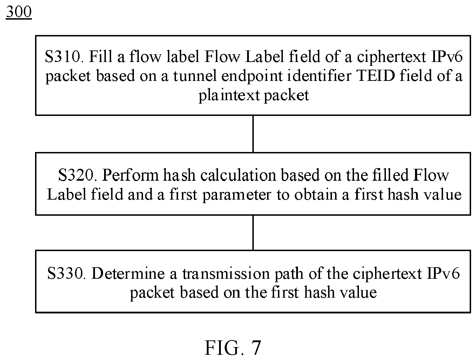

A communication method provided in this application is described in detail below with reference to FIG. 7.

FIG. 7 is a schematic flowchart of another Internet Protocol version IPv6-based wireless network communication method 300 according to an embodiment of this application. The method 300 may be applied to the scenario shown in FIG. 1, or certainly may be applied to another communication scenario. This is not limited in this embodiment of this application.

It should be further understood that, in this embodiment of this application, the method is described by using an example in which the method is performed by an access network device and a security gateway. By way of example but not limitation, the method may alternatively be performed by chips, chip systems, processors, or the like used in the access network device and the security gateway.

As shown in FIG. 7, the method 300 shown in FIG. 7 may include S310 and S330. The steps in the method 300 are described in detail below with reference to FIG. 7.

S310. Fill a flow label Flow Label field of a ciphertext IPv6 packet based on a tunnel endpoint identifier TEID field of a plaintext IPv6 packet.

S320. Perform hash calculation based on the filled Flow Label field and a first parameter involved in hash calculation, to obtain a first hash value.

S330. Determine a transmission path of the ciphertext IPv6 packet based on the first hash value.

The flow label Flow Label field of the ciphertext IPv6 packet is filled based on the tunnel endpoint identifier TEID field of the plaintext packet, where the tunnel endpoint identifier TEID field is an identifier of a bearer, and a TEID field of each bearer is different. Therefore, the flow label Flow Label field of the ciphertext IPv6 packet filled based on the tunnel endpoint identifier TEID field of the plaintext packet is associated with the bearer. Hash calculation is performed based on the filled Flow Label field and the first parameter involved in hash calculation to obtain the first hash value. Determining the transmission path of the ciphertext IPv6 packet based on the first hash value can ensure that ciphertext IPv6 packets of a same bearer can be transmitted on a same path, or ciphertext IPv6 packets of different bearers can be fully hashed, thereby implementing load balancing. Table 10 describes load balancing of a ciphertext packet obtained by filling a flow label (Flow Label) field by using a TEID and calculating hash values of a 3-tuple in a dual-path scenario. A tunnel local IP address and a tunnel peer IP address in Table 10 are ciphertext IPv6 addresses.

**Table 10 Load balancing achieved after packets are encrypted**

| Session | SIP | DIP | Flow Label | TEID | Hash value | Modulo 2 calculation result | Path selection |
|---|---|---|---|---|---|---|---|
| User 1 | Local tunnel IPv6 address | Peer tunnel IPv6 address | 123 | 1234 | 321 | 1 | PATH2 |
| User 2 | Local tunnel IPv6 address | Peer tunnel IPv6 address | 234 | 2345 | 432 | 0 | PATH1 |
| User 3 | Local tunnel IPv6 address | Peer tunnel IPv6 address | 345 | 3456 | 543 | 1 | PATH2 |
| User 4 | Local tunnel IPv6 address | Peer tunnel IPv6 address | 456 | 4567 | 654 | 0 | PATH1 |
| User 5 | Local tunnel IPv6 address | Peer tunnel IPv6 address | 567 | 5678 | 765 | 1 | PATH2 |

It should be understood that the first parameter involved in hash calculation may include any one or more of the following parameters: an SIP of the ciphertext IPv6 packet, a DIP of the ciphertext IPv6 packet, and a Next Header of the ciphertext IPv6 packet.

In addition to obtaining the first hash value by performing hash calculation based on the filled Flow Label field and the first parameter involved in hash calculation, the first hash value may be calculated based on a 3-tuple (including the SIP of the ciphertext IPv6 packet, the DIP of the ciphertext IPv6 packet, and the filled Flow Label field). This is not limited in this application. In this embodiment of this application, a 3-tuple is used as an example to describe how to determine a transmission path of a plaintext packet or a ciphertext packet.

First, when the plaintext packet is an IPv6 packet, how to fill the Flow Label field of the ciphertext IPv6 packet based on the tunnel endpoint identifier TEID field of the plaintext packet is described.

In an implementation, when the plaintext packet is the IPv6 packet, N bits of the TEID field are filled into N bits of the Flow Label field of the ciphertext IPv6 packet, where the Flow Label field of the ciphertext IPv6 packet includes N bits. Alternatively, hash calculation is performed on the TEID field and a first parameter to obtain a second hash value, and N bits of the second hash value are filled into N bits of the Flow Label field of the ciphertext IPv6 packet, where the Flow Label field of the ciphertext IPv6 packet includes N bits.

In an implementation, when the plaintext packet is an IPv6 packet, the Flow Label field of the ciphertext IPv6 packet includes a first field and a second field, and a part with a length the same as that of the first field or the second field of the Flow Label field of the ciphertext IPv6 packet is intercepted from the TEID field, to fill the first field or the second field of the Flow Label field of the ciphertext IPv6 packet. Alternatively, hash calculation is performed on the TEID field and the first parameter to obtain a third hash value, and a part with a length the same as that of the first field or the second field of the Flow Label field of the ciphertext IPv6 packet is intercepted from the third hash value, to fill the first field or the second field of the Flow Label field of the ciphertext IPv6 packet.

In an implementation, the plaintext packet is an IPv6 packet. The flow label Flow Label field of the plaintext IPv6 packet is filled based on the tunnel endpoint identifier TEID field of the plaintext IPv6 packet, and the filled flow label Flow Label field of the plaintext IPv6 packet is copied to the flow label Flow Label field of the ciphertext IPv6 packet.

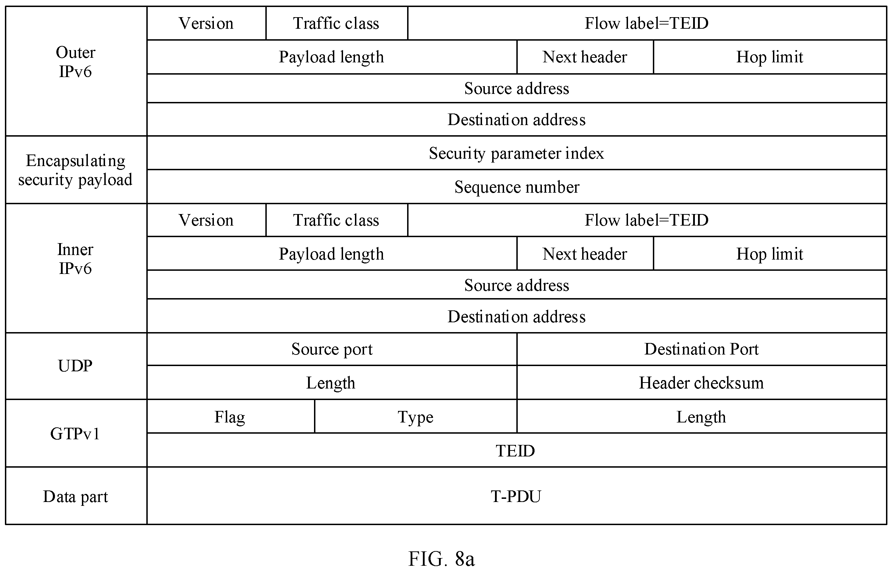

FIG. 8a shows a filling manner in an IPsec authentication header (Authentication Header, AH) encapsulation scenario. A TEID field is filled into a Flow Label field by an IPv6 header (Inner IPv6) of a plaintext packet, and when an IPv6 header (Outer IPv6) of a ciphertext packet is encapsulated after the plaintext packet is encrypted, the Flow Label field of the plaintext packet is filled into a Flow Label field of the IPv6 header of the ciphertext packet. Flow Label fields of ciphertext packets of different bearer services are different, and therefore, the hash value may be hashed based on the bearer.

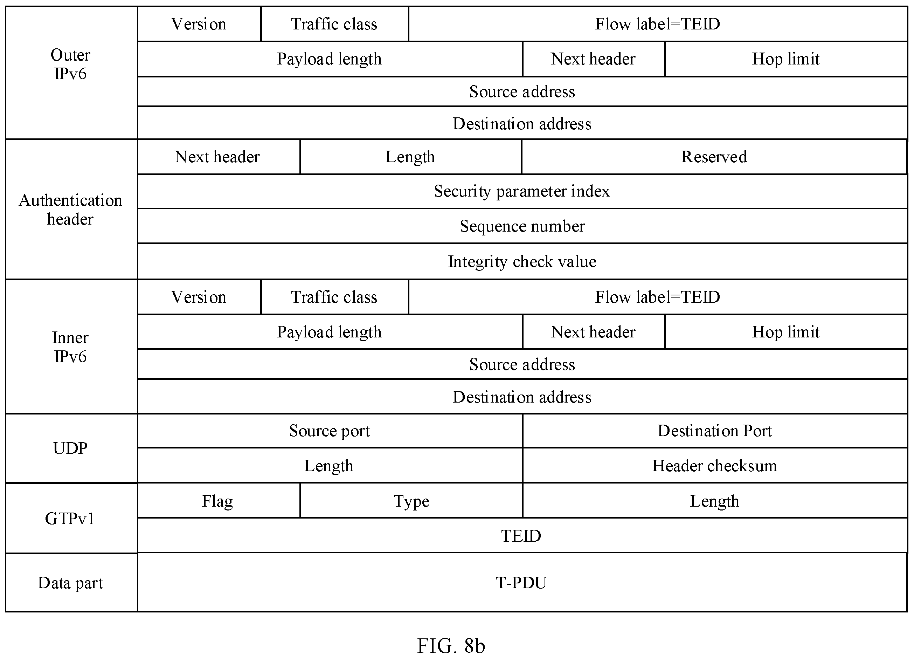

FIG. 8b shows a filling manner in an IPsec encapsulating security payload (Encapsulating Security Payload, ESP) encapsulation scenario. Refer to one filling manner in the foregoing IPsec AH encapsulation scenario. Details are not described herein again.

In an implementation, the plaintext packet is an IPv6 packet. The flow label Flow Label field of the plaintext IPv6 packet is filled based on the tunnel endpoint identifier TEID field of the plaintext IPv6 packet, and the flow label Flow Label field of the ciphertext IPv6 packet is filled based on the filled flow label Flow Label field of the plaintext IPv6 packet. It should be understood that for a specific method for filling the flow label Flow Label field of the plaintext IPv6 packet based on the tunnel endpoint identifier TEID field of the plaintext IPv6 packet, refer to the method described in the foregoing method 200. Details are not described herein again.

In an implementation, that the flow label Flow Label field of the ciphertext IPv6 packet is filled based on the filled flow label Flow Label field of the plaintext IPv6 packet includes: performing hash calculation on the flow label Flow Label field of the plaintext IPv6 packet and the first parameter to obtain a fourth hash value; and filling the Flow Label field of the ciphertext IPv6 packet based on the fourth hash value.

In an implementation, the Flow Label field of the ciphertext packet includes a third field and a fourth field. The filling the Flow Label field of the ciphertext IPv6 packet based on the fourth hash value includes: filling N bits of the fourth hash value into N bits of the Flow Label field of the ciphertext IPv6 packet, where the Flow Label field includes N bits; or intercepting, from the fourth hash value, a part with a length the same as that of the third field or the fourth field of the Flow Label field of the ciphertext IPv6 packet, to fill the third field or the fourth field of the Flow Label field of the ciphertext IPv6 packet.

In an implementation, the plaintext packet is an IPv6 packet. When the plaintext packet is fragmented into a plurality of chips, a flow label Flow Label field of the plaintext IPv6 packet is filled based on the tunnel endpoint identifier TEID field of the plaintext IPv6 packet; the plaintext IPv6 packet filled with the Flow Label field is fragmented into a plurality of chips, where each of the plurality of chips includes the filled Flow Label field; and the Flow Label field of each chip is copied to a Flow Label field of an encrypted ciphertext packet of each chip.

In an implementation, the plaintext packet is an IPv6 packet. When the plaintext packet is fragmented into a plurality of chips, the method further includes: fragmenting the plaintext packet into the plurality of chips; encrypting each of the plurality of chips to obtain a ciphertext packet of each chip; filling a Flow Label field of the ciphertext packet of each chip based on the tunnel endpoint identifier TEID field of the plaintext packet; performing hash calculation based on the Flow Label field of the ciphertext packet and a second parameter involved in hash calculation to obtain a fifth hash value; and determine a transmission path of the ciphertext packet based on the fifth hash value.

In an implementation, the filling a Flow Label field of the ciphertext packet of each chip based on the tunnel endpoint identifier TEID field of the plaintext packet includes: filling N bits of the TEID field into N bits of the Flow Label field of the ciphertext packet of each chip, where the Flow Label field of the ciphertext packet of each chip includes N bits; or performing hash calculation on the TEID field and the first parameter to obtain a sixth hash value, and filling N bits of the sixth hash value into N bits of the Flow Label field of the ciphertext packet of each chip, where the Flow Label field of the ciphertext packet of each chip includes N bits.

In an implementation, the Flow Label field of the ciphertext packet of each chip includes a fifth field and a sixth field, and the filling a Flow Label field of the ciphertext packet of each chip based on the tunnel endpoint identifier TEID field of the plaintext packet includes: intercepting, from the TEID field, a part with a length the same as that of the fifth field or the sixth field of the Flow Label field of the ciphertext packet of each chip, to fill the fifth field or the sixth field of the Flow Label field of the ciphertext packet of each chip; or performing hash calculation on the TEID field and the first parameter to obtain a seventh hash value; and intercepting, from the ninth hash value, a part with a length the same as that of the fifth field or the sixth field of the Flow Label field of the ciphertext packet of each chip, to fill the fifth field or the sixth field of the Flow Label field of the ciphertext packet of each chip.

In an implementation, the first parameter includes at least one of the following parameters:
an SIP of the ciphertext packet, a DIP of the ciphertext packet, and a Next Header of the ciphertext packet.

In an implementation, the second parameter includes at least one of the following parameters:
an SIP of the plaintext packet, a DIP of the plaintext packet, a source port SPt of the plaintext packet, a destination port DPt of the plaintext packet, and a Next Header of the plaintext packet.

To more clearly understand how to fill the tunnel endpoint identifier TEID field of the plaintext IPv6 packet into the flow label Flow Label field of the ciphertext IPv6 packet, the following provides description according to a specific example.

For example, a Flow Label field in an inner IPv6 header of a plaintext packet is directly copied to fill in the Flow Label field of the ciphertext IPv6 packet.

For example, after hash calculation is performed on a 3-tuple (including Out_SIP, Out_DIP, and Inner_FL), 20 bits are intercepted for filling, or only 18 bits are intercepted for filling and the first two bits are reserved.

For example, after hash calculation is performed on a 4-tuple (including Out_SIP, Out_DIP, Out_Next_Header, and Inner_FL), 20 bits are intercepted for filling, or only 18 bits are intercepted for filling and the first two bits are reserved.

In the foregoing examples, Out and Inner indicate an IPv6 header of an outer ciphertext and an IPv6 header of an inner plaintext in an IPsec tunnel mode.

The following describes how to determine a transmission path of a ciphertext IPv6 packet based on a tunnel endpoint identifier TEID field of the plaintext packet when the plaintext packet is an IPv4 packet.

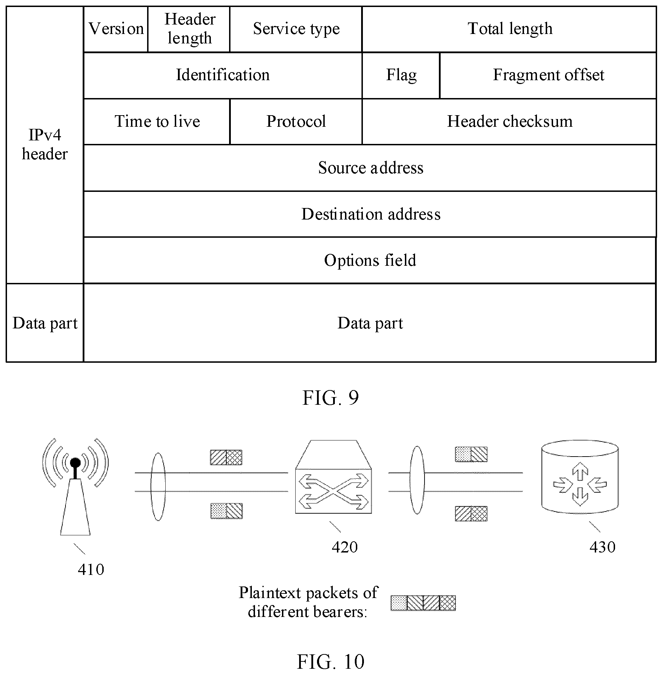

A basic format of the IPv4 packet is described first. FIG. 9 shows a basic format of an IPv4 packet. The IPv4 packet includes an IPv4 header and a payload. The IPv4 header includes:
IP Version (4 bits), where a value of this field is 4;
Header Length (Header Length, HL), 4 bits;
Type of Service (Type of Service, TOS), which differentiates priorities for data packets waiting to pass through a transmission device;
Total Length (Total Length, TL), which is a 16-bit field indicating a length of an IP datagram in bytes, and the length includes an IP header and a data payload;
Identification is a 16-bit field, and the 16-bit field is a value that increases in sequence and is allocated to a message sent by a source IP. When a message transmitted to an IP layer is too large to be placed in one datagram, the IP layer splits the message into a plurality of datagrams, and sorts the datagrams and assigns a same identifier to the datagrams. A receiver reassembles the message into an original message based on these values;
Flag Flags, where a length of this field is three bits, the first bit is not used, the second bit is a "don't fragment" bit, where if this bit is set to 1, it indicates that an intermediate forwarding node cannot fragment a packet, and the third bit is a "more fragment" bit, where if the third bit is set to 1, it indicates there are subsequent fragmentation packets;
Fragment offset Fragment Offset, where this field is a value, and an IP of a destination device uses this value to reassemble fragments in a correct sequence;
Time to live (Time To Live, TTL), where this field indicates router hops that can be reserved before a data packet is discarded. Each router checks this field and subtracts at least one from the router hops. When a value of this field reaches 0, the data packet is discarded;
Protocol Protocol, where this field indicates a protocol used by payload data;
Header checksum Header Checksum, where this field is used only to check validity of a header. Each router that a datagram passes through recalculates a value of the TTL field because the value of the TTL field keeps changing;
Source IP address (Source IP Address, SIP);
Destination IP address (Destination IP Address, DIP);
Options field Options, which supports some optional header settings and is mainly used for testing, debugging, and security purposes; and
Payload Payload, which is a data part.

It can be learned from the foregoing that the IPv4 packet does not include the Flow Label field. Therefore, in an implementation, when the plaintext packet is an IPv4 packet, the filling the flow label Flow Label field of the ciphertext IPv6 packet based on the tunnel endpoint identifier TEID field of the plaintext packet includes: filling N bits of the TEID field into N bits of the Flow Label field of the ciphertext IPv6 packet, where the Flow Label field of the ciphertext IPv6 packet includes N bits; or performing hash calculation on the TEID field and the first parameter to obtain an eighth hash value, and filling N bits of the eighth hash value into N bits of the Flow Label field of the ciphertext IPv6 packet, where the Flow Label field of the ciphertext IPv6 packet includes N bits.

In an implementation, when the plaintext packet is an IPv4 packet, the Flow Label field of the ciphertext IPv6 packet includes a seventh field and an eighth field. The filling the flow label Flow Label field of the ciphertext IPv6 packet based on the tunnel endpoint identifier TEID field of the plaintext packet includes: intercepting, from the TEID field, a part with a length the same as that of the seventh field or the eighth field of the Flow Label field of the ciphertext IPv6 packet, to fill the seventh field or the eighth field of the Flow Label field of the ciphertext IPv6 packet; or performing hash calculation on the TEID field and the first parameter to obtain a ninth hash value, and intercepting, from the ninth hash value, a part with a length the same as that of the seventh field or the eighth field of the Flow Label field of the ciphertext IPv6 packet, to fill the seventh field or the eighth field of the Flow Label field of the ciphertext IPv6 packet.

In an implementation, the plaintext packet is an IPv4 packet. The plaintext packet is fragmented into a plurality of chips. Each of the plurality of chips is encrypted to obtain a ciphertext IPv6 packet of each chip. A Flow Label field of the ciphertext IPv6 packet of each chip is filled based on the tunnel endpoint identifier TEID field of the plaintext packet.

It should be understood that the plaintext packet is an IPv4 packet. For a method for filling the Flow Label field of the ciphertext IPv6 packet of each chip based on the tunnel endpoint identifier TEID field of the plaintext packet, refer to the foregoing method for filling the Flow Label field of the ciphertext IPv6 packet of each chip based on the tunnel endpoint identifier TEID field of the plaintext packet when the plaintext packet is an IPv6 packet. Details are not described herein again.

In an implementation, the first parameter includes at least one of the following parameters:
an SIP of the ciphertext packet, a DIP of the ciphertext packet, and a Next Header of the ciphertext packet.

In an implementation, the second parameter includes at least one of the following parameters:
an SIP of the plaintext packet, a DIP of the plaintext packet, a Next Header of the plaintext packet, a source port SPt of the plaintext packet, and a destination port DPt of the plaintext packet.

It should be understood that, in the embodiment of the method 300, if the plaintext packet is an IPv6 packet, and the Flow Label field of the plaintext packet has been filled, an access network device may directly fill the flow label Flow Label field of the ciphertext IPv6 packet based on the flow label Flow Label field of the plaintext IPv6 packet. For a specific filling manner, refer to the foregoing method. To avoid repetition, details are not described herein again.

In this embodiment of this application, in a scenario in which the access network device uses only one pair of service IPv6 addresses and one pair of Internet key exchange IKE IPv6 addresses, an uplink plaintext and ciphertext can implement flow load balancing on a plurality of transmission ports of the access network device on per bearer basis, effectively and fully utilizing transmission bandwidth. In a scenario in which a downlink plaintext uses only one pair of service IPv6 addresses in a core network device, the downlink plaintext implements flow load balancing on a plurality of transmission ports of the core network on per bearer basis, effectively utilizing the transmission bandwidth. In a scenario in which a downlink ciphertext uses one pair of service IPv6 addresses and one pair of IKE IPv6 addresses on a security gateway, after a downlink packet is encrypted on the security gateway, flow load balancing is implemented on a plurality of transmission ports on per bearer basis, effectively utilizing transmission bandwidth.

It should be understood that filling a field 1 into a field 2 in embodiments of this application means filling a value of the field 1 into the field 2. In other words, the value of the field 1 is equal to the value of the field 2. For example, intercepting, from the TEID field, a part with a length the same as that of the first field of the Flow Label field, to fill the first field of the Flow Label field means filling a value of the part intercepted from the TEID field into the first field of the Flow Label field. In other words, the value of the part intercepted from the TEID field is equal to a value of the first field of the Flow Label field.

It should be understood that in embodiments of this application, filling N bits of the field 1 into N bits of the field 2 means filling a value of the N bits of the field 1 into the N bits of the field 2. In other words, the value of the N bits of the field 1 is equal to a value of the N bits of the field 2. For example, filling the N bits of the TEID field into the N bits of the Flow Label field means filling a value of the TEID field into the Flow Label field. In other words, the value of the TEID field is equal to a value of the Flow Label field.

The following briefly describes load balancing and reliability in a plurality of scenarios in embodiments of this application. Figure 10 shows an "IEEE 802.3ad Ethernet link aggregation" technology for load balancing. Ethernet link aggregation is to aggregate a plurality of Ethernet links into an aggregation group, to implement load sharing among member ports and improve connection reliability. In FIG. 10, an access network device 410, a switch 420, and a router 430 are included. Two lines in FIG. 10 represent that two links are aggregated together. A link for sending a packet depends on a hash value. Corresponding to a hash value calculated by using a 3-tuple in this embodiment of this application, the access network device 410 may perform content described in the method 200, that is, corresponding to a procedure in FIG. 4. In the figure, different types of packets represent packets of different bearers. Packets of a same bearer are transmitted on a same path because of hash values are consistent. Packets of different bearers can be hashed on different paths for transmission. If one path is faulty, flow packets that should be transmitted on the faulty path can be immediately transferred to another path for transmission, improving reliability.

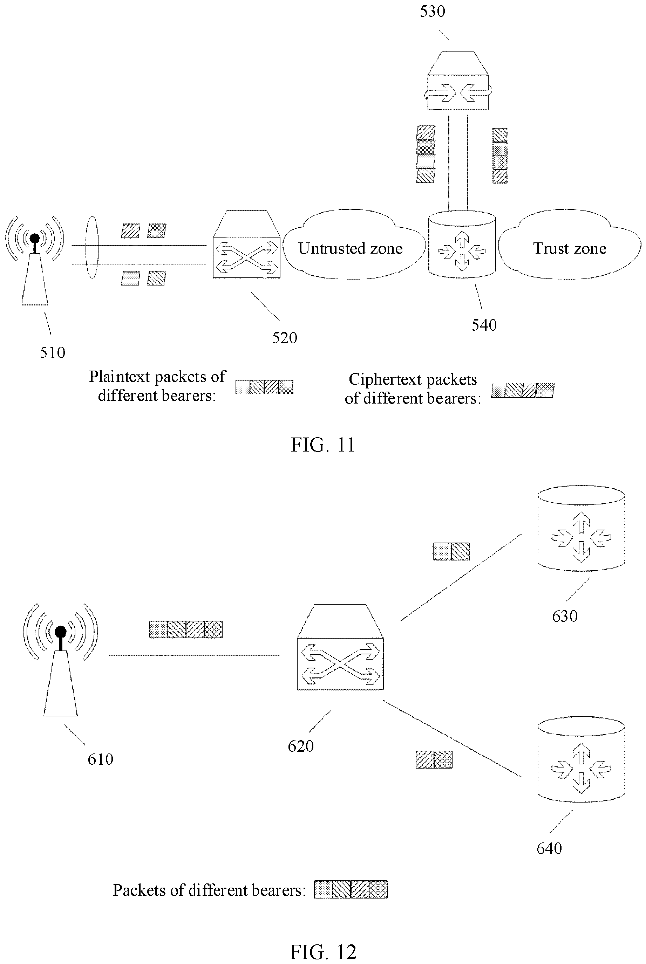

In FIG. 11, in a ciphertext scenario, source and intermediate nodes implement bearer-based flow load balancing based on hash calculation. FIG. 11 is a ciphertext scenario in FIG. 10. In FIG. 11, an access network device 510, a switch 520, a security gateway 530, and a router 540 are included. During uplink data transmission, the access network device 510 may execute content described in the method 200, and copy a flow label field filled in a plaintext packet to a ciphertext packet, so that the ciphertext packet obtains bearer information. Load balancing may be performed in a manner shown in FIG. 10. During uplink data transmission, the security gateway 530 may execute content described in the method 300, that is, corresponding to the procedure in FIG. 7.

In FIG. 12, in an equal-cost routing scenario, source and intermediate nodes implement bearer-based flow load balancing based on hash calculation. An access network device 610, a switch 620, a router 630, and a router 640 are included in FIG. 12. Two routes with a same priority are configured on the switch 620. The access network device 610 may perform content described in the method 200, that is, corresponding to the procedure in FIG. 4. The access network device 610 calculates a hash value based on a filled Flow Label field and a second parameter, to determine to forward packets to different paths via different routes, to implement load balancing among a plurality of paths.

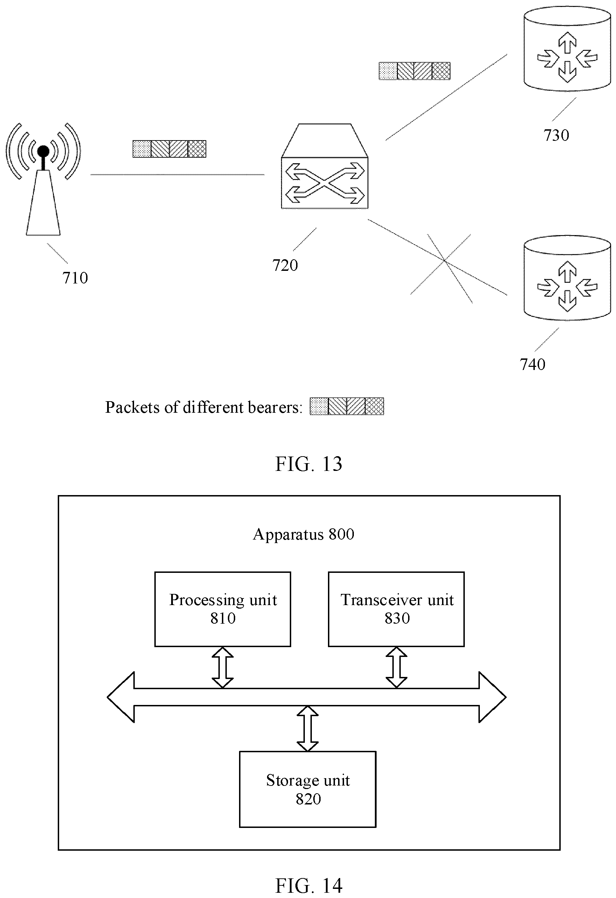

In FIG. 13, an access network device 710, a switch 720, a router 730, and a router 740 are included. Two routes with a same priority are configured on the switch 720. In a load balancing scenario, when one path is faulty, for example, a path from the switch 720 to the router 740 is faulty, a service is quickly switched to a normal path for transmission to improve reliability, which is much faster than reliability switching of the Layer 4 protocol.

It should be understood that a source device is a packet sender, and may be an access network device or a core network device. The intermediate node may be a router, a switch, or the like.

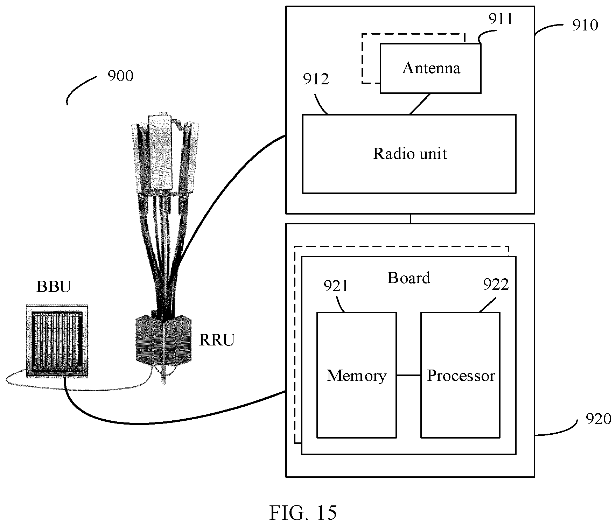

The foregoing describes the Internet Protocol version IPv6-based wireless network communication method according to embodiments of this application in detail with reference to FIG. 1 to FIG. 13. The following describes communication apparatuses according to embodiments of this application in detail with reference to FIG. 14 and FIG. 15.

FIG. 14 is a schematic block diagram of a communication apparatus 800 according to an embodiment of this application.

In some embodiments, the apparatus 800 may be an access network device, or may be a chip or a circuit, for example, a chip or a circuit that may be disposed in the access network device.

In some embodiments, the apparatus 800 may be a core network device, or may be a chip or a circuit, for example, a chip or a circuit that may be disposed in the core network device.

In some embodiments, the apparatus 800 may be a security gateway device, or may be a chip or a circuit, for example, a chip or a circuit that may be disposed in the security gateway device.

In a possible manner, the apparatus 800 may include a processing unit 810 (that is, an example of a processor) and a transceiver unit 830. In some possible implementations, the processing unit 810 may also be referred to as a determining unit. In some possible implementations, the transceiver unit 830 may include a receiving unit and a sending unit.

In an implementation, the transceiver unit 830 may be implemented using a transceiver, a transceiver-related circuit, or an interface circuit.

In an implementation, the apparatus may further include a storage unit 820. In a possible manner, the storage unit 820 is configured to store instructions. In an implementation, the storage unit may alternatively be configured to store data or information. The storage unit 820 may be implemented using a memory.

In a possible design, the processing unit 810 is configured to execute the instructions stored in the storage unit 820, to enable the apparatus 800 to implement the steps performed by the terminal device in the foregoing method. Alternatively, the processing unit 810 may be configured to invoke the data in the storage unit 820, to enable the apparatus 800 to implement the steps performed by the terminal device in the foregoing method.

In a possible design, the processing unit 810 is configured to execute the instructions stored in the storage unit 820, to enable the apparatus 800 to implement the steps performed by the access network device in the foregoing method. Alternatively, the processing unit 810 may be configured to invoke the data in the storage unit 820, to enable the apparatus 800 to implement the steps performed by the access network device in the foregoing method.

For example, the processing unit 810, the storage unit 820, and the transceiver unit 830 may communicate with each other through an internal connection path to transfer a control signal and/or a data signal. For example, the storage unit 820 is configured to store a computer program. The processing unit 810 may be configured to invoke the computer program from the storage unit 820 and run the computer program, to control the transceiver unit 830 to receive a signal and/or send a signal, to complete the steps of the terminal device or the access network device in the foregoing method. The storage unit 820 may be integrated into the processing unit 810, or may be disposed separately from the processing unit 810.

Optionally, if the apparatus 800 is a communication device (for example, the terminal device or the access network device), the transceiver unit 830 includes a receiver and a transmitter. The receiver and the transmitter may be a same physical entity or different physical entities. When the receiver and the transmitter are a same physical entity, the receiver and the transmitter may be collectively referred to as a transceiver.

Optionally, if the apparatus 800 is the chip or the circuit, the transceiver unit 830 includes an input interface and an output interface.

In an implementation, a function of the transceiver unit 830 may be considered to be implemented using a transceiver circuit or a transceiver-dedicated chip. It may be considered that the processing unit 810 may be implemented by using a dedicated processing chip, a processing circuit, a processing unit, or a general-purpose chip.

In another implementation, it may be considered that the communication device (for example, the terminal device or the access network device) provided in this embodiment of this application is implemented by using a general-purpose computer. That is, program code for implementing functions of the processing unit 810 and the transceiver unit 830 is stored in the storage unit 820, and the general-purpose processing unit implements the functions of the processing unit 810 and the transceiver unit 830 by executing the code in the storage unit 820.

In some embodiments, the apparatus 800 may be an access network device or a core network device, or may be a chip or a circuit disposed in the access network device or the core network device. When the apparatus 800 is an access network device or a core network device, or a chip or a circuit disposed in the access network device or the core network device, the processing unit 810 is configured to determine a transmission path of a plaintext IPv6 packet based on a tunnel endpoint identifier TEID field of the plaintext IPv6 packet; and the transceiver unit 830 is configured to transmit the plaintext IPv6 packet on the determined transmission path of the plaintext IPv6 packet.

In an implementation, the processing unit 810 is specifically configured to fill a flow label Flow Label field of the plaintext IPv6 packet based on the tunnel endpoint identifier TEID field of the plaintext IPv6 packet; perform hash calculation based on the filled Flow Label field and a first parameter involved in hash calculation to obtain a first hash value, where an SIP and a DIP are an SIP and a DIP of the plaintext IPv6 packet; and determine the transmission path of the plaintext IPv6 packet based on the first hash value.

In an implementation, the processing unit 810 is specifically configured to fill N bits of the TEID field into N bits of the Flow Label field, where the Flow Label field includes N bits; or perform hash calculation on the TEID field and the first parameter to obtain a second hash value, and fill N bits of the second hash value into N bits of the Flow Label field, where the Flow Label field includes N bits.

In an implementation, the Flow Label field of the plaintext IPv6 packet includes a first field and a second field. The processing unit 810 is specifically configured to intercept, from the TEID field, a part with a length the same as that of the first field or the second field of the Flow Label field, to fill the first field or the second field of the Flow Label field; or perform hash calculation on the TEID field and the first parameter to obtain a second hash value, and intercept, from the second hash value, a part with a length the same as that of the first field or the second field of the Flow Label field, to fill the first field or the second field of the Flow Label field.

In an implementation, the processing unit 810 is further configured to copy the flow label Flow Label field of the plaintext IPv6 packet to a Flow Label field of a ciphertext IPv6 packet; or perform hash calculation on the flow label Flow Label field of the plaintext IPv6 packet and a second parameter to obtain a fifth hash value, and fill the Flow Label field of the ciphertext IPv6 packet based on the fifth hash value.

When the apparatus 800 is configured in or is the access network device or the core network, modules or the units in the apparatus 800 may be configured to perform the actions or the processing processes performed by the access network device or the core network device in the foregoing methods. To avoid repetition, detailed descriptions are omitted herein.

In some embodiments, the apparatus 800 may be a security gateway, or may be a chip or a circuit disposed in the security gateway. When the apparatus 800 is a security gateway, or a chip or a circuit disposed in the security gateway, the transceiver unit 830 is configured to receive a plaintext packet sent by a core network device; and the processing unit 810 is configured to fill a flow label Flow Label field of a ciphertext IPv6 packet based on a tunnel endpoint identifier TEID field of a plaintext packet, where the ciphertext IPv6 packet is a packet obtained by encrypting the plaintext packet. The processing unit is further configured to perform hash calculation based on the filled Flow Label field of the ciphertext IPv6 packet and a first parameter involved in hash calculation to obtain a first hash value, where an SIP and a DIP are an SIP and a DIP of the ciphertext IPv6 packet; and determine a transmission path of the ciphertext IPv6 packet based on the first hash value.

In an implementation, the plaintext packet is an IPv6 packet or an IPv4 packet. The processing unit 810 is configured to fill N bits of the TEID field into N bits of the Flow Label field of the ciphertext IPv6 packet, where the Flow Label field of the ciphertext IPv6 packet includes N bits; or perform hash calculation on the TEID field and the first parameter to obtain a second hash value, and fill N bits of the second hash value into N bits of the Flow Label field of the ciphertext IPv6 packet, where the Flow Label field of the ciphertext IPv6 packet includes N bits.

In an implementation, the plaintext packet is an IPv6 packet or an IPv4 packet, and the Flow Label field of the ciphertext IPv6 packet includes a first field and a second field. The processing unit 810 is configured to intercept, from the TEID field, a part with a length the same as that of the first field or the second field of the Flow Label field of the ciphertext IPv6 packet, to fill the first field or the second field of the Flow Label field of the ciphertext IPv6 packet; or perform hash calculation on the TEID field and the first parameter to obtain a third hash value, and intercept, from the third hash value, a part with a length the same as that of the first field or the second field of the Flow Label field of the ciphertext IPv6 packet, to fill the first field or the second field of the Flow Label field of the ciphertext IPv6 packet.

In an implementation, the plaintext packet is an IPv6 packet. The processing unit 810 is configured to fill a flow label Flow Label field of the plaintext IPv6 packet based on the tunnel endpoint identifier TEID field of the plaintext IPv6 packet, and copy the filled flow label Flow Label field of the plaintext IPv6 packet to the flow label Flow Label field of the ciphertext IPv6 packet.

In an implementation, the plaintext packet is an IPv6 packet. When the plaintext packet is fragmented into a plurality of chips, the processing unit 810 is further configured to fill a flow label Flow Label field of the plaintext IPv6 packet based on the tunnel endpoint identifier TEID field of the plaintext IPv6 packet; fragment the plaintext IPv6 packet filled with the Flow Label field into a plurality of chips, where each of the plurality of chips includes the filled Flow Label field; copy the Flow Label field of each chip to a Flow Label field of an encrypted ciphertext packet of each chip; perform hash calculation based on the Flow Label field of the ciphertext packet and the first parameter to obtain a fourth hash value; and determine a transmission path of each ciphertext packet based on the fourth hash value.

In an implementation, the processing unit 810 is further configured to fill N bits of the TEID field into N bits of the Flow Label field of the plaintext IPv6 packet, where the Flow Label field of the plaintext IPv6 packet includes N bits; or perform hash calculation on the TEID field and a second parameter to obtain a fifth hash value, and fill N bits of the fifth hash value into N bits of the Flow Label field of the plaintext IPv6 packet, where the Flow Label field of the plaintext IPv6 packet includes N bits.

In an implementation, the Flow Label field of the plaintext IPv6 packet includes a first field and a second field. The processing unit 810 is configured to intercept, from the TEID field, a part with a length the same as that of the first field or the second field of the Flow Label field of the plaintext IPv6 packet, to fill the first field or the second field of the Flow Label field of the plaintext IPv6 packet; or perform hash calculation on the TEID field and a second parameter to obtain a sixth hash value, and intercept, from the sixth hash value, a part with a length the same as that of the first field or the second field of the Flow Label field of the plaintext IPv6 packet, to fill the first field or the second field of the Flow Label field of the plaintext IPv6 packet.

In an implementation, the plaintext packet is an IPv4 packet or an IPv6 packet. When the plaintext packet is fragmented into a plurality of chips, the processing unit 810 is further configured to fragment the plaintext packet into the plurality of chips; encrypt each of the plurality of chips to obtain a ciphertext packet of each chip; fill a Flow Label field of the ciphertext packet of each chip based on the tunnel endpoint identifier TEID field of the plaintext packet; perform hash calculation based on the Flow Label field of the ciphertext packet and the first parameter to obtain a seventh hash value; and determine a transmission path of each ciphertext packet based on the seventh hash value.

When the apparatus 800 is configured in the security gateway or is the security gateway, the modules or the units in the apparatus 800 may be configured to perform the actions or the processing processes performed by the security gateway in the foregoing methods. To avoid repetition, detailed descriptions are omitted herein.

For concepts, explanations, detailed descriptions, and other steps of the apparatus 800 that are related to the technical solutions provided in embodiments of this application, refer to the descriptions of the content in the foregoing methods or other embodiments. Details are not described herein again.

FIG. 15 is a schematic diagram of a structure of an access network device 900 according to an embodiment of this application. The access network device 900 may be configured to implement functions of the access device (for example, a first access network device, a second access network device, or a third access network device) in the foregoing method. The access network device 900 includes one or more radio frequency units such as a remote radio unit (remote radio unit, RRU) 910 and one or more baseband units (baseband unit, BBU) (which may also be referred to as a digital unit (digital unit, DU)) 920. The RRU 910 may be referred to as a transceiver unit, a transceiver, a transceiver circuit, a transceiver machine, or the like, and may include at least one antenna 911 and a radio unit 912. The RRU 910 is mainly configured to send and receive a radio frequency signal, and perform conversion between a radio frequency signal and a baseband signal, for example, is configured to send the signaling messages in the foregoing embodiments to a terminal device. The BBU 920 is mainly configured to perform baseband processing, control a base station, and the like. The RRU 910 and the BBU 920 may be physically disposed together, or may be physically separated, that is, in a distributed base station.

The BBU 920 is a control center of the base station, and is also referred to as a processing unit, mainly configured to implement a baseband processing function such as channel encoding, multiplexing, modulation, or spreading. For example, the BBU (the processing unit) 920 may be configured to control a base station 40 to perform an operation procedure related to the network device in the foregoing method embodiments.

In an example, the BBU 920 may include one or more boards, and a plurality of boards may jointly support a radio access network (such as an LTE system or a 5G system) in a single access standard, or may separately support radio access networks in different access standards. The BBU 920 further includes a memory 921 and a processor 922. The memory 921 is configured to store necessary instructions and data. For example, the memory 921 stores the codebook and the like in the foregoing embodiments. The processor 922 is configured to control the base station to perform a necessary action, for example, configured to control the base station to perform the operation procedure related to the network device in the foregoing method embodiments. The memory 921 and the processor 922 may serve one or more boards. In other words, a memory and a processor may be deployed on each board. Alternatively, the plurality of boards may share a same memory and processor. In addition, a necessary circuit may further be deployed on each board.

In a possible implementation, with development of a system-on-chip (system-on-chip, SoC) technology, all or some functions of the parts 920 and 910 may be implemented by using the SoC technology, for example, implemented by using one base station function chip. The base station function chip integrates components such as a processor, a memory, and an antenna port. A program of a base station-related function is stored in the memory, and the processor executes the program to implement the base station-related function. Optionally, the base station function chip can also read an external memory of the chip, to implement a related function of the base station.

It should be understood that the structure of the access network device shown in FIG. 15 is merely a possible form, and should not constitute any limitation on embodiments of this application. This application does not exclude a possibility that a base station structure of another form may appear in the future.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a computer-readable medium that stores a computer program. When the computer program is executed by a computer, the steps performed by the access network device, the steps performed by the core network device, or the steps performed by the security gateway device in any one of the foregoing embodiments are implemented.

An embodiment of this application further provides a computer program product. When the computer program product is executed by a computer, the steps performed by the access network device, the steps performed by the core network device, or the steps performed by the security gateway device in any one of the foregoing embodiments are implemented.

An embodiment of this application further provides a system chip. The system chip includes a communication unit and a processing unit. The processing unit may be, for example, a processor. The communication unit may be, for example, a communication interface, an input/output interface, a pin, a circuit, or the like. The processing unit may execute computer instructions, so that the chip in the communication apparatus performs the steps performed by the access network device, the steps performed by the core network device, or the steps performed by the security gateway device provided in the foregoing embodiments of this application.

Optionally, the computer instructions are stored in a storage unit.

According to the method provided in embodiments of this application, an embodiment of this application further provides a communication system. The communication system includes the foregoing access network device, core network device, and security gateway device.

Embodiments in this application may be used independently, or may be used jointly. This is not limited herein.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

It should be understood that all table parameters in this application are merely used as examples, and do not represent specific calculated values, parameters, or the like.

It should be understood that the term "and/or" describes an association relationship between associated objects, and represents that three relationships may exist. For example, A and/or B may represent the following three cases: Only A exists, both A and B exist, and only B exists. The character "/" generally indicates an "or" relationship between the associated objects. The term " at least one" means one or more. The term " at least one of A and B", similar to the term "A and/or B", describes an association relationship between associated objects and represents that three relationships may exist. For example, at least one of A and B may represent the following three cases: Only A exists, both A and B exist, and only B exists.

It should be understood that there are a plurality of hash values in this application, for example, "first hash value", "second hash value", and "third hash value". They represent hash values obtained by performing a hash operation based on different parameters. Specific values of the "first hash value", "second hash value", and "third hash value" are determined by hash parameters. "First", "second", "third", and the like do not impose any limitation on the hash value.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division or may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions of embodiments.

In addition, function units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An Internet Protocol version IPv6-based wireless network communication method, comprising:
determining a transmission path of a plaintext IPv6 packet based on a tunnel endpoint identifier TEID field of the plaintext IPv6 packet, wherein the TEID field indicates a bearer to which the plaintext IPv6 packet belongs; and
transmitting the plaintext IPv6 packet on the determined transmission path of the plaintext IPv6 packet.

2. The method according to claim 1, wherein the determining a transmission path of a plaintext IPv6 packet based on a tunnel endpoint identifier TEID field of the plaintext IPv6 packet comprises:
filling a flow label Flow Label field of the plaintext IPv6 packet based on the tunnel endpoint identifier TEID field of the plaintext IPv6 packet;
performing hash calculation based on the filled Flow Label field and a first parameter to obtain a first hash value; and
determining the transmission path of the plaintext IPv6 packet based on the first hash value.

3. The method according to claim 2, wherein the Flow Label field comprises N bits, and the filling a flow label Flow Label field of the plaintext IPv6 packet based on the tunnel endpoint identifier TEID field of the plaintext IPv6 packet comprises:
filling N bits of the TEID field into N bits of the Flow Label field; or
performing hash calculation on the TEID field and the first parameter to obtain a second hash value, and filling N bits of the second hash value into N bits of the Flow Label field.

4. The method according to claim 2, wherein the Flow Label field of the plaintext IPv6 packet comprises a first field and a second field, and the filling a flow label Flow Label field of the plaintext IPv6 packet based on the tunnel endpoint identifier TEID field of the plaintext IPv6 packet comprises:
intercepting, from the TEID field, a part with a length the same as that of the first field or the second field of the Flow Label field, to fill the first field or the second field of the Flow Label field; or
performing hash calculation on the TEID field and the first parameter to obtain a second hash value, and intercepting, from the second hash value, a part with a length the same as that of the first field or the second field of the Flow Label field, to fill the first field or the second field of the Flow Label field.

5. The method according to any one of claims 1 to 4, wherein the method further comprises:
filling a flow label Flow Label field of a ciphertext IPv6 packet based on a tunnel endpoint identifier TEID field of a plaintext IPv4 packet, wherein the ciphertext IPv6 packet is a packet obtained by encrypting the plaintext packet;
performing hash calculation based on the filled Flow Label field of the ciphertext IPv6 packet and a second parameter to obtain a sixth hash value; and
determining a transmission path of the ciphertext IPv6 packet based on the third hash value.

6. The method according to claim 5, wherein the filling a flow label Flow Label field of a ciphertext IPv6 packet based on a tunnel endpoint identifier TEID field of a plaintext IPv4 packet comprises:
filling N bits of the TEID field into N bits of the Flow Label field of the ciphertext IPv6 packet, wherein the Flow Label field of the ciphertext IPv6 packet comprises N bits; or
performing hash calculation on the TEID field and the second parameter to obtain a fourth hash value; and
filling N bits of the fourth hash value into N bits of the Flow Label field of the ciphertext IPv6 packet, wherein the Flow Label field of the ciphertext IPv6 packet comprises N bits.

7. The method according to claim 6, wherein the Flow Label field of the ciphertext IPv6 packet comprises a third field and a fourth field, and the filling a flow label Flow Label field of a ciphertext IPv6 packet based on a tunnel endpoint identifier TEID field of a plaintext IPv4 packet comprises:
intercepting, from the TEID field, a part with a length the same as that of the third field or the fourth field of the Flow Label field of the ciphertext IPv6 packet, to fill the third field or the fourth field of the Flow Label field of the ciphertext IPv6 packet; or
performing hash calculation on the TEID field and the second parameter to obtain a fifth hash value; and
intercepting, from the fifth hash value, a part with a length the same as that of the third field or the fourth field of the Flow Label field of the ciphertext IPv6 packet, to fill the third field or the fourth field of the Flow Label field of the ciphertext IPv6 packet.

8. The method according to claim 5, wherein the plaintext IPv4 packet comprises a plurality of chips, and the method further comprises:
encrypting each of the plurality of chips to obtain a ciphertext packet of each chip;
filling a Flow Label field of the ciphertext packet of each chip based on the tunnel endpoint identifier TEID field of the plaintext IPv4 packet; and
performing hash calculation based on the Flow Label field of the ciphertext packet and the second parameter to obtain a sixth hash value; and
the determining a transmission path of the ciphertext IPv6 packet based on the third hash value comprises:
determining a transmission path of each ciphertext chip based on the sixth hash value.

9. The method according to claim 8, wherein the filling a Flow Label field of the ciphertext packet of each chip based on the tunnel endpoint identifier TEID field of the plaintext IPv4 packet comprises:
filling N bits of the TEID field into N bits of the Flow Label field of the ciphertext packet of each chip, wherein the Flow Label field of the ciphertext packet of each chip comprises N bits; or
performing hash calculation on the TEID field and the second parameter to obtain a seventh hash value; and
filling N bits of the seventh hash value into N bits of the Flow Label field of the ciphertext packet of each chip, wherein the Flow Label field of the ciphertext packet of each chip comprises N bits.

10. The method according to claim 8, wherein the Flow Label field of the ciphertext packet of each chip comprises a fifth field and a sixth field, and the filling a Flow Label field of the ciphertext packet of each chip based on the tunnel endpoint identifier TEID field of the plaintext packet comprises:
intercepting, from the TEID field, a part with a length the same as that of the fifth field or the sixth field of the Flow Label field of the ciphertext packet of each chip, to fill the fifth field or the sixth field of the Flow Label field of the ciphertext packet of each chip; or
performing hash calculation on the TEID field and the second parameter to obtain an eighth hash value; and
intercepting, from the eighth hash value, a part with a length the same as that of the fifth field or the sixth field of the Flow Label field of the ciphertext packet of each chip, to fill the fifth field or the sixth field of the Flow Label field of the ciphertext packet of each chip.

11. An Internet Protocol version IPv6-based communication method, comprising:
receiving a plaintext packet from a core network device;
filling a flow label Flow Label field of a ciphertext IPv6 packet based on a tunnel endpoint identifier TEID field of the plaintext packet, wherein the ciphertext IPv6 packet is a packet obtained by encrypting the plaintext packet;
performing hash calculation based on the filled Flow Label field of the ciphertext IPv6 packet and a first parameter to obtain a first hash value; and
determining a transmission path of the ciphertext IPv6 packet based on the first hash value.

12. The method according to claim 11, wherein the plaintext packet is an IPv6 packet or an IPv4 packet, and the filling a flow label Flow Label field of a ciphertext IPv6 packet based on a tunnel endpoint identifier TEID field of the plaintext packet comprises:
filling N bits of the TEID field into N bits of the Flow Label field of the ciphertext IPv6 packet, wherein the Flow Label field of the ciphertext IPv6 packet comprises N bits; or
performing hash calculation on the TEID field and the first parameter to obtain a second hash value; and
filling N bits of the second hash value into N bits of the Flow Label field of the ciphertext IPv6 packet, wherein the Flow Label field of the ciphertext IPv6 packet comprises N bits.

13. The method according to claim 11, wherein the plaintext packet is an IPv6 packet or an IPv4 packet, the Flow Label field of the ciphertext IPv6 packet comprises a first field and a second field, and the filling a flow label Flow Label field of a ciphertext IPv6 packet based on a tunnel endpoint identifier TEID field of the plaintext packet comprises:
intercepting, from the TEID field, a part with a length the same as that of the first field or the second field of the Flow Label field of the ciphertext IPv6 packet, to fill the first field or the second field of the Flow Label field of the ciphertext IPv6 packet; or
performing hash calculation on the TEID field and the first parameter to obtain a third hash value; and
intercepting, from the third hash value, a part with a length the same as that of the first field or the second field of the Flow Label field of the ciphertext IPv6 packet, to fill the first field or the second field of the Flow Label field of the ciphertext IPv6 packet.

14. The method according to claim 11, wherein the plaintext packet is an IPv6 packet, and the filling a flow label Flow Label field of a ciphertext IPv6 packet based on a tunnel endpoint identifier TEID field of the plaintext packet comprises:
filling a flow label Flow Label field of the plaintext IPv6 packet based on the tunnel endpoint identifier TEID field of the plaintext IPv6 packet; and
copying the filled flow label Flow Label field of the plaintext IPv6 packet to the flow label Flow Label field of the ciphertext IPv6 packet.

15. The method according to claim 11, wherein the plaintext packet is an IPv6 packet, when the plaintext packet is fragmented into a plurality of chips, the method further comprises:
filling a flow label Flow Label field of the plaintext IPv6 packet based on the tunnel endpoint identifier TEID field of the plaintext IPv6 packet;
fragmenting the plaintext IPv6 packet filled with the Flow Label field into a plurality of chips, wherein each of the plurality of chips comprises the filled Flow Label field;
copying the Flow Label field of each chip to a Flow Label field of an encrypted ciphertext packet of each chip;
performing hash calculation based on the Flow Label field of the ciphertext packet and the first parameter to obtain a fourth hash value; and
determining a transmission path of each ciphertext packet based on the fourth hash value.

16. The method according to claim 14 or 15, wherein the filling a flow label Flow Label field of the plaintext IPv6 packet based on the tunnel endpoint identifier TEID field of the plaintext IPv6 packet comprises:
filling N bits of the TEID field into N bits of the Flow Label field of the plaintext IPv6 packet, wherein the Flow Label field of the plaintext IPv6 packet comprises N bits; or
performing hash calculation on the TEID field and a second parameter to obtain a fifth hash value; and
filling N bits of the fifth hash value into N bits of the Flow Label field of the plaintext IPv6 packet, wherein the Flow Label field of the plaintext IPv6 packet comprises N bits.

17. The method according to claim 14 or 15, wherein the Flow Label field of the plaintext IPv6 packet comprises a first field and a second field, and the filling a flow label Flow Label field of the plaintext IPv6 packet based on the tunnel endpoint identifier TEID field of the plaintext IPv6 packet comprises:
intercepting, from the TEID field, a part with a length the same as that of the first field or the second field of the Flow Label field of the plaintext IPv6 packet, to fill the first field or the second field of the Flow Label field of the plaintext IPv6 packet; or
performing hash calculation on the TEID field and a second parameter to obtain a sixth hash value; and
intercepting, from the sixth hash value, a part with a length the same as that of the first field or the second field of the Flow Label field of the plaintext IPv6 packet, to fill the first field or the second field of the Flow Label field of the plaintext IPv6 packet.

18. The method according to claim 11, wherein the plaintext packet is an IPv4 packet or an IPv6 packet, when the plaintext packet is fragmented into a plurality of chips, the method further comprises:
fragmenting the plaintext packet into the plurality of chips;
encrypting each of the plurality of chips to obtain a ciphertext packet of each chip;
filling a Flow Label field of the ciphertext packet of each chip based on the tunnel endpoint identifier TEID field of the plaintext packet;
performing hash calculation based on the Flow Label field of the ciphertext packet and the first parameter to obtain a seventh hash value; and
determining a transmission path of each ciphertext packet based on the seventh hash value.

19. The method according to claim 18, wherein the filling a Flow Label field of the ciphertext packet of each chip based on the tunnel endpoint identifier TEID field of the plaintext packet comprises:
filling N bits of the TEID field into N bits of the Flow Label field of the ciphertext packet of each chip, wherein the Flow Label field of the ciphertext packet of each chip comprises N bits; or
performing hash calculation on the TEID field and the first parameter to obtain an eighth hash value; and
filling N bits of the eighth hash value into N bits of the Flow Label field of the ciphertext packet of each chip, wherein the Flow Label field of the ciphertext packet of each chip comprises N bits.

20. The method according to claim 19, wherein the Flow Label field of the ciphertext packet of each chip comprises a first field and a second field, and the filling a Flow Label field of the ciphertext packet of each chip based on the tunnel endpoint identifier TEID field of the plaintext packet comprises:
intercepting, from the TEID field, a part with a length the same as that of the first field or the second field of the Flow Label field of the ciphertext packet of each chip, to fill the first field or the second field of the Flow Label field of the ciphertext packet of each chip; or
performing hash calculation on the TEID field and the first parameter to obtain a ninth hash value; and
intercepting, from the ninth hash value, a part with a length the same as that of the first field or the second field of the Flow Label field of the ciphertext packet of each chip, to fill the first field or the second field of the Flow Label field of the ciphertext packet of each chip.

21. A communication apparatus, comprising a processor, wherein the processor is connected to a memory, the memory is configured to store a computer program, and the processor is configured to execute the computer program stored in the memory, so that the apparatus performs the method according to any one of claims 1 to 10 or the method according to any one of claims 11 to 20.

22. A computer-readable storage medium, wherein the computer-readable storage medium stores a computer program; and when the computer program is run, the method according to any one of claims 1 to 10 or the method according to any one of claims 11 to 20 is implemented.

23. A chip, comprising a processor and an interface, wherein
the processor is configured to read instructions to perform the method according to any one of claims 1 to 10 or the method according to any one of claims 11 to 20.

24. A communication system, comprising a communication device for performing the method according to any one of claims 1 to 10 and a communications device for performing the method according to any one of claims 11 to 20.

25. A computer program product, wherein the computer program product comprises a program, and when the program is run, the method according to any one of claims 1 to 20 is performed.

26. A communication apparatus, wherein the communication apparatus is configured to perform the method according to any one of claims 1 to 20.
